# EUROPEAN PATENT SPECIFICATION

(11) **EP 2 092 419 B1**
(45) Date of publication and mention of the grant of the patent: **01.01.2020**
(21) Application number: 07845064.0
(22) Date of filing: 12.11.2007
(51) Int. Cl.: G06F 16/903, G06F 16/90

(54) **METHOD AND SYSTEM FOR HIGH PERFORMANCE DATA METATAGGING AND DATA INDEXING USING COPROCESSORS**
VERFAHREN UND SYSTEM FÜR HOCHLEISTUNGSDATEN-METATAGGING UND DATENINDEXIERUNG UNTER VERWENDUNG VON COPROZESSOREN
PROCÉDÉ ET SYSTÈME POUR EFFECTUER UN MARQUAGE MÉTA DE DONNÉES À HAUTE PERFORMANCE ET UN INDEXAGE DE DONNÉES UTILISANT DES COPROCESSEURS

(30) Priority: 13.11.2006 US 865629 P
(43) Date of publication of application: 26.08.2009
(73) Proprietor: IP Reservoir, LLC, Creve Coeur, MO 63141 (US)
(72) Inventor: INDECK, Ronald S., St. Louis, MO 63132 (US); SINGLA, Naveen, St. Louis, MO 63132-4610 (US); TAYLOR, David E., St. Louis, MO 63118 (US)
(74) Representative: Mewburn Ellis LLP
(86) International application number: PCT/US2007/084464
(87) International publication number: WO 2008/063973

(56) References cited:
- WO-A2-03/100662
- US-A1- 2005 187 974
- US-A1- 2006 031 263
- US-A1- 2006 136 570
- US-B2- 7 093 023

## Description

### Field of the Invention:

The present invention is generally directed toward the field of metadata generation and data indexing, particularly the indexing of high speed data streams.

### Terminology:

The following paragraphs provide several definitions for various terms used herein. These paragraphs also provide background information relating to these terms.

GPP: As used herein, the term "general-purpose processor" (or GPP) refers to a hardware device having a fixed form and whose functionality is variable, wherein this variable functionality is defined by fetching instructions and executing those instructions (for example, an Intel Xeon processor or an AMD Opteron processor), of which a conventional central processing unit (CPU) is a common example.

Reconfigurable Logic: As used herein, the term "reconfigurable logic" refers to any logic technology whose form and function can be significantly altered (i.e., reconfigured) in the field post-manufacture. This is to be contrasted with a GPP, whose function can change post-manufacture, but whose form is fixed at manufacture.

Software: As used herein, the term "software" refers to data processing functionality that is deployed on a GPP or other processing devices, wherein software cannot be used to change or define the form of the device on which it is loaded.

Firmware: As used herein, the term "firmware" refers to data processing functionality that is deployed on reconfigurable logic or other processing devices, wherein firmware may be used to change or define the form of the device on which it is loaded.

Coprocessor: As used herein, the term "coprocessor" refers to a computational engine designed to operate in conjunction with other components in a computational system having a main processor (wherein the main processor itself may comprise multiple processors such as in a multi-core processor architecture). Typically, a coprocessor is optimized to perform a specific set of tasks and is used to offload tasks from a main processor (which is typically a GPP) in order to optimize system performance. The scope of tasks performed by a coprocessor may be fixed or variable, depending on the architecture of coprocessor. Examples of fixed coprocessor architectures include Graphics Processor Units which perform a broad spectrum of tasks and floating point numeric coprocessors which perform a relatively narrow set of tasks. Examples of reconfigurable coprocessor architectures include reconfigurable logic devices such as Field Programmable Gate Arrays (FPGAs) which may be reconfigured to implement a wide variety of fixed or programmable computational engines. The functionality of a coprocessor may be defined via software and/or firmware.

Hardware Acceleration: As used herein, the term "hardware acceleration" refers to the use of software and/or firmware implemented on a coprocessor for offloading one or more processing tasks from a main processor to decrease processing latency for those tasks relative to the main processor.

Enterprise: As used herein, the term "enterprise" refers to any business organization or governmental entity that stores and/or processes data (referred to as "enterprise data") as part of its ongoing operations.

Database: As used herein, the term "database" refers to a persistent data store with indexing capabilities to expedite query processing. Various database management system (DBMS) implementations might be categorized as relational (RDBMS), object-oriented (OODBMS), hierarchical, etc.; however, the dominant architecture in today's industry is a relational, row-column, structured query language (SQL)-capable database. An ANSI-standard SQL database engine is a mature software architecture that can retrieve structured data in response to a query, usually in an efficient manner.

Structured Data: As used herein, the term "structured data" refers to data that has been normalized and persisted to a relational database. Normalization is the data design process of putting data into a tabular, row-column format and abstracting duplicate data into separate tables. Structured data in relational columns is capable of being indexed with B-tree indexes, significantly speeding access to the data in these columns. In SQL terms, structured columns have size limits. These columns may have constraints and referential integrity applied to them in order to ensure consistent data quality. Examples of common structured SQL datatypes are: INT(eger), NUMBER, CHAR(acter), VARCHAR, DATE, TIMESTAMP.

Unstructured Data: As used herein, the term "unstructured data" refers to data that falls outside the scope of the definition above for structured data. Thus, the term unstructured data encompasses files, documents or objects with free form text or embedded values included therein. This data includes the complete set of bytes, often including binary-format data, that was used by the application that generated it. Examples of unstructured data include word processing documents (e.g., Microsoft Word documents in their native format), Adobe Acrobat documents, emails, image files, video files, audio files, and other files in their native formats relative to the software application that created them. In SQL terms, unstructured columns have very large, if not unlimited size. Common examples of unstructured SQL datatypes are: BLOB, TEXT, XML, RAW, and IMAGE. Unstructured objects may also be stored outside the database, for example in operating system files. Access to these external objects from within the database engine uses links in the metadata in the database table to the storage location.

There are a number of reasons why XML is will not normally be categorized as "structured" as that term is used herein:
- XML may have large or unlimited sized values
- XML often does not have strongly enforced datatyping
- XML has a flexible schema
- XML values in elements and attributes is often not as rigidly conformed and carefully cleansed as traditional "structured" database columns
Although the concept of "semi-structured" data with flexible schemas is emerging, particularly for XML, for present purposes everything that is not has not been normalized and persisted to a relational database will be considered unstructured data. As such, a column that is of the XML datatype would thus fall under this present definition of "unstructured data".

Metadata: As used herein, the term "metadata" in the context of data objects and documents refers to data that describes or characterizes a data object or document. Examples of object and document metadata include but are not limited to file type, byte size, date created, date last modified, author, title, information about the document's/object's data source (optionally including the name and version number of the program used to generate the document), information about whether the data matches other data, subject coverage, classification information (e.g. information about its concepts, person/place/entity names that are found within the document/data object, word counts, etc.), position information relating to data within a document/object, or other content-derived information about documents/objects.

Bus: As used herein, the term "bus" refers to a logical bus which encompasses any physical interconnect for which devices and locations are accessed by an address. Examples of buses that could be used in the practice of the present invention include, but are not limited to the PCI family of buses (e.g., PCI-X and PCI-Express) and HyperTransport buses.

Pipelining: As used herein, the terms "pipeline", "pipelined sequence", or "chain" refer to an arrangement of application modules wherein the output of one application module is connected to the input of the next application module in the sequence. This pipelining arrangement allows each application module to independently operate on any data it receives during a given clock cycle and then pass its output to the next downstream application module in the sequence during another clock cycle.

Full-Text Search: As used herein, the term "full-text search" refers to scanning through the entire body of a document or object, considering every word or byte. This processing may allow for approximations, tokenization based on tagging for a flexible schema, wild-carding, or complex matching.

Text Analytics and Text Mining: As used herein, the terms "text analytics" and "text mining" refer to algorithms that operate on document objects using complex language concepts such as semantics. Examples of text analytic/text mining processing include: named entity recognition, content extraction, document classification, document summarization, natural language processing, statistical pattern learning, and relevance ranking.

### Background of the Invention:

Enterprises such as corporations, institutions, agencies, and other entities have massive amounts of data that they need to manage. While some of an enterprise's critical data are normalized, structured, and stored in relational databases, most enterprises' data (generally thought to be around 80% of enterprise data) is unstructured. With conventional computing systems, effective management and efficient access to such unstructured data is problematic.

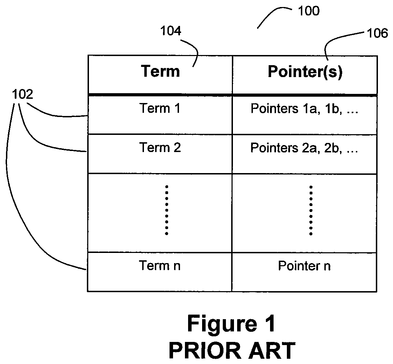

Indexing is a well-known technique that is used to increase the efficiency by which data can be searched. An index is a list of terms and pointers associated with a collection of data. An example of such an index 100 is shown in Figure 1. Index 100 comprises a plurality of index entries 102, with each index entry 102 comprising a term 104 (see the "term" column in the table) and one or more pointers 106 (see the "pointer(s)" column in the table. The terms 104 in an index can be words, phrases, or other information associated with the data. In many situations, these terms are user-specified. Each pointer 106 in an index corresponds to the term 104 for that entry 102 and identifies where that term can be found in the data. With unstructured data, the data collection often comprises a plurality of documents. Examples of documents include items such a word processing files, spreadsheet files, emails, images, Adobe Acrobat files, web pages, books, pages of books, etc.

However, the inventors note their belief that conventional indexing techniques require a tremendous amount of time to generate an effective index. Even relatively small data sets can take days to effectively index with conventional indexing techniques deployed in software on central processors such as GPPs because of indexing's computationally-intensive nature. Because of the sheer volume of data that enterprises encounter on a daily basis, it is simply not practical for enterprises to index all of the data in its possession (and to which it has access) using these conventional indexing techniques. Instead, enterprises are forced to make a priori decisions as to which data will be subjected to indexing; this is particularly true for unstructured data which comprises the bulk of most enterprises' data. In doing so, enterprises are left without an effective means for efficiently managing and searching much of its data.

D1 (US Pat App Pub 2006/0136570) discloses a runtime adaptable search processor that provides content search capabilities using a combination of non-deterministic finite state automaton (NFA) and deterministic finite state automaton (DFA) based search engines.

### Summary of the Invention:

In an effort to address this need in the art, the inventors herein disclose a technique for hardware-accelerating the generation of metadata for data. This data may comprise both structured and/or unstructured data. From this metadata, rich indexes can be generated to enable robust and high performance data searching and analysis. With embodiments of the present invention, data is streamed into a coprocessor, and metadata for the indexes is generated at bus bandwidth rates, thereby leading to dramatic improvements in indexing latency. Because of such improvements in latency, much larger amounts (if not all) of an enterprise's data can be efficiently and effectively indexed.

In doing so, the present invention preferably harnesses the underlying hardware-accelerated technology disclosed in the following patents and patent applications: U.S. patent 6,711,558 entitled "Associated Database Scanning and Information Retrieval", U.S. Patent 7,139,743 entitled "Associative Database Scanning and Information Retrieval using FPGA Devices", U.S. Patent Application Publication 2006/0294059 entitled "Intelligent Data Storage and Processing Using FPGA Devices", U.S. Patent Application Publication 2007/0067108 entitled "Method and Apparatus for Performing Biosequence Similarity Searching", U.S. Patent Application publication entitled "Method and Apparatus for Protein Sequence Alignment Using FPGA Devices" (published from U.S. Application Serial No. 11/836,947, filed August 10, 2007), U.S. Patent Application Publication 2007/0130140 entitled "Method and Device for High Performance Regular Expression Pattern Matching", U.S. Patent Application publication entitled "Method and Apparatus for Approximate Pattern Matching" (published from U.S. Application Serial No. 11/381,214, filed May 2, 2006), U.S. Patent Application Publication 2007/0174841 entitled "Firmware Socket Module for FPGA-Based Pipeline Processing", and U.S. Patent Application Publication 2007/0237327 entitled "Method and System for High Throughput Blockwise Independent Encryption/Decryption").

As documents are streamed into a coprocessor, any of a number of metadata generation operations can be flexibly performed on the document stream. For example, exact matching and approximate matching operations can be performed on the words within a document stream to find which words within the document stream are "hits" against the words in any of a number of dictionaries. From these "hits", rich indexes can quickly be generated.

For ease of reference, the term "documents" will be often be used to describe the unstructured data that is indexed in accordance with various embodiments of the present invention. However, it should be noted that the use of the term "documents" is meant to be only exemplary as other forms unstructured data can also be indexed using the techniques described herein. Also, the term "words" is used to describe bits within a data stream that are grouped together for the purposes of metadata generation operations. Words preferably correspond to the bytes that form discrete character strings, wherein the characters may be any combination of letters, numbers, or other characters.

In accordance with an extremely powerful aspect of an embodiment of the invention, the coprocessor can perform regular expression pattern matching on a received document stream to detect whether any of a plurality of pre-defined patterns exist within the document stream. Examples of patterns that can detected using regular expression pattern matching include social security numbers, credit card numbers, telephone numbers, email address, etc. By developing indexes based on these patterns, an enterprise can effectively answer an indefinite pattern-based question such as "How many of our documents contain a credit card number?" without having to re-analyze all of the enterprise's documents. Instead, the generated index pertaining to the credit card pattern can be accessed to lookup all documents that have been identified as containing a credit card number.

Furthermore, classification and clustering operations can be performed on documents using a coprocessor to further analyze and index those documents.

The high performance stream indexing that is enabled by the present invention has a myriad of useful applications. For example, the email traffic within and/or incoming to an enterprise can be efficiently indexed "on the fly" before or as that email traffic reaches its addressees.

Similarly, the web traffic (e.g., the web pages downloaded by user computers within an enterprise) can also be indexed "on the fly" using various embodiments of the present invention.

Web search engines could employ the embodiments of the present invention to stream web page content through an appliance configured to perform the metadata generation and index generation techniques described herein. The web search engine can then apply search queries against the generated index(es) when formulating responses to those search queries. It is expected that the present invention can be employed to dramatically reduce the lag time that it takes for new web pages to become "findable" through Internet search engines.

Also, the embodiments of the present invention can be employed to operate on data being saved to a disk by any computers within an enterprise.

Another application pertains to analyzing and indexing data streams such as incoming sales transactions, incoming news wire information, and log files.

Yet another application pertains to retroactively indexing existing enterprise data, including indexing previously-unindexed enterprise data and re-indexing previously-indexed enterprise data.

These and other features and advantages of the present invention will be apparent to those having ordinary skill in the art upon review of the following description and drawings.

### Brief Description of the Drawings:

Figure 1 depicts an exemplary index;
Figure 2(a) illustrates an exemplary metadata generating appliance in accordance with an embodiment of the present invention;
Figure 2(b) illustrates an exemplary metadata generating appliance in accordance with another embodiment of the present invention;
Figure 2(c) illustrates an exemplary metadata generating appliance in accordance with yet another embodiment of the present invention;
Figures 3(a) and (b) illustrate exemplary printed circuit boards for use in the appliances of Figures 2(a)-(c);
Figure 4 illustrates an example of how a firmware pipeline can be deployed across multiple reconfigurable logic devices;
Figure 5(a) is a high level block diagram view of how a coprocessor can be used to generate metadata for data that streams therethrough;
Figure 5(b) depicts an exemplary index that can be created from the metadata produced by the coprocessor of Figure 5(a);
Figure 6 depicts an exemplary firmware pipeline that can be deployed within reconfigurable logic to perform a desired metadata generation operation;
Figure 7(a) depicts an exemplary firmware pipeline that can be used to perform the stream pre-processing operation shown in Figure 6;
Figure 7(b) depicts an exemplary output stream of words and feature vectors that can be produced by the firmware pipeline of Figure 7(a);
Figure 8(a) depicts an exemplary specialized index generation operation that performs seeks to exactly match the words within the incoming data stream against the words in a dictionary to thereby generate a specialized index;
Figure 8(b) depicts an exemplary specialized index generation operation that performs seeks to approximately match the words within the incoming data stream against the words in a dictionary to thereby generate a specialized index;
Figure 9(a) depicts an exemplary specialized index generation operation that performs seeks to exactly match the words within the incoming data stream against the words in a plurality of different dictionaries to thereby generate a plurality of specialized indexes;
Figure 9(b) depicts an exemplary specialized index generation operation that performs seeks to match the words within the incoming data stream against a plurality of different regular expression patterns to thereby generate a plurality of specialized indexes;
Figure 9(c) depicts an exemplary specialized index generation operation that performs seeks to match the words within the incoming data stream against the words in a plurality of different dictionaries and against a plurality of different regular expression patterns to thereby generate a plurality of specialized indexes;
Figure 10 depicts an exemplary technique for inserting the generated indexes into operational indexes maintained by a relational database;
Figure 11(a) depicts a stream pre-processing firmware pipeline that includes a word counting module;
Figure 11(b) depicts an exemplary index that includes metadata relating to the word counting function of Figure 11(a);
Figure 11(c) depicts an exemplary firmware pipeline wherein the generated metadata corresponds to classification data about the incoming documents;
Figure 12(a) depicts an exemplary classification operation that produces class scores for incoming documents to assess their relevance to a plurality of different classifications;
Figure 12(b) depicts an exemplary classification operation that determines a classification for each incoming document;
Figures 13(a) and (b) depict exemplary firmware pipelines that employ histogram generation to enable document clustering;
Figures 14(a) and (b) depict exemplary firmware pipelines that perform classification, specialized index generation, and histogram generation operations on incoming documents;
Figure 15 depicts an exemplary environment in which the appliance of Figures 2(a)-(c) can be employed;
Figure 16 illustrates an exemplary overview of a document ingest pre-processing operation that can employ the metadata generation techniques described herein;
Figure 17 illustrates an exemplary logical view of a document ingest pre-processing operation in accordance with the Figure 2(c) embodiment; and
Figure 18 illustrates an exemplary data flow within the appliance of Figure 2(c) for a document ingest pre-processing operation that can employ the metadata generation techniques described herein.

### Detailed Description of the Preferred Embodiments:

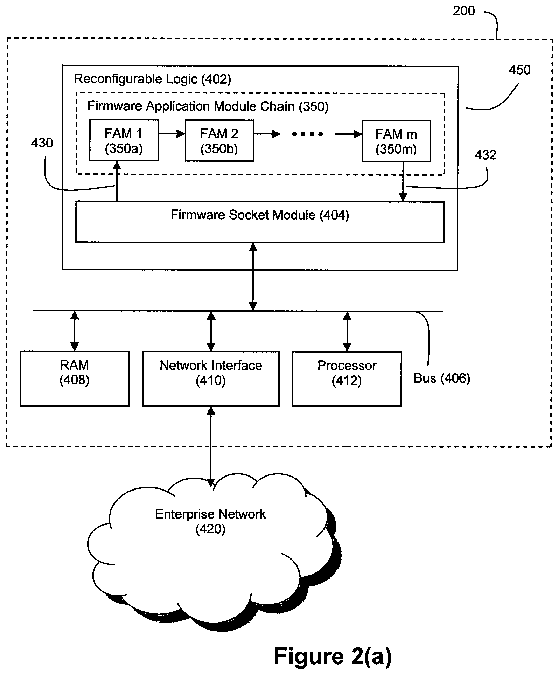

Figure 2(a) depicts an exemplary embodiment for a metadata generating appliance 200. While an embodiment of appliance 200 can be referred to as a metadata generating appliance, it should be noted that functionalities in addition to metadata generation can be supported by appliance 200.

Preferably, appliance 200 employs a hardware-accelerated data processing capability through coprocessor 450 to generate the desired metadata. Within appliance 200, a coprocessor 450 is positioned to receive data that streams into the appliance 200 from a network 420 (via network interface 410). Network 420 preferably comprises an enterprise network (whether LAN or WAN), in which various disparate data sources are located. Such incoming data may comprise both structured and unstructured data as appliance 200 can provide beneficial metadata generation operations for both data types.

The computer system defined by processor 412 and RAM 408 can be any commodity computer system as would be understood by those having ordinary skill in the art. For example, the computer system may be an Intel Xeon system or an AMD Opteron system. Thus, processor 412, which serves as the central or main processor for appliance 200, preferably comprises a GPP.

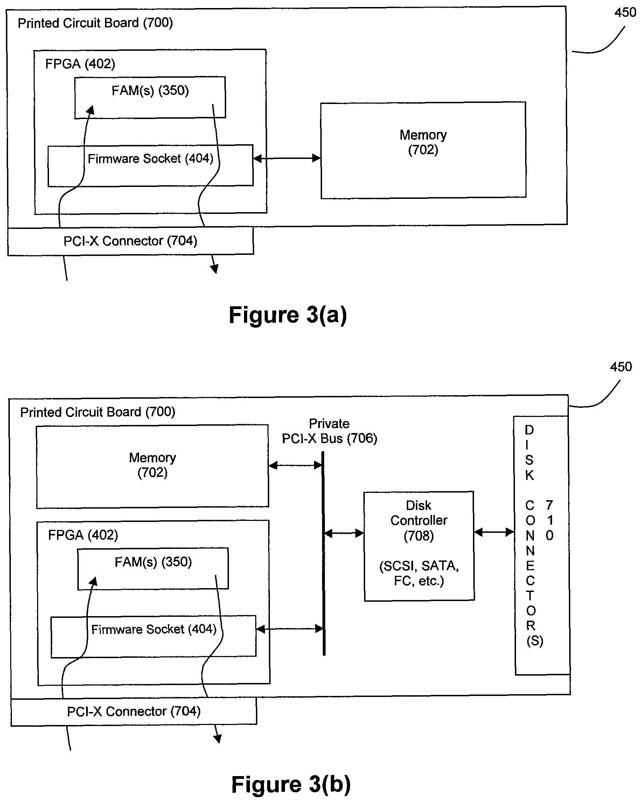

In a preferred embodiment, the coprocessor 450 comprises a reconfigurable logic device 402. Preferably, data streams into the reconfigurable logic device 402 by way of system bus 406, although other design architectures are possible (see Figure 3(b)). Preferably, the reconfigurable logic device 402 is a field programmable gate array (FPGA), although this need not be the case. System bus 406 can also interconnect the reconfigurable logic device 402 with the appliance's processor 412 as well as the appliance's RAM 408. In a preferred embodiment, system bus 406 may be a PCI-X bus or a PCI-Express bus, although this need not be the case.

The reconfigurable logic device 402 has firmware modules deployed thereon that define its functionality. The firmware socket module 404 handles the data movement requirements (both command data and target data) into and out of the reconfigurable logic device, thereby providing a consistent application interface to the firmware application module (FAM) chain 350 that is also deployed on the reconfigurable logic device. The FAMs 350i of the FAM chain 350 are configured to perform specified data processing operations on any data that streams through the chain 350 from the firmware socket module 404. Preferred examples of FAMs that can be deployed on reconfigurable logic in accordance with a preferred embodiment of the present invention are described below.

The specific data processing operation that is performed by a FAM is controlled/parameterized by the command data that FAM receives from the firmware socket module 404. This command data can be FAM-specific, and upon receipt of the command, the FAM will arrange itself to carry out the data processing operation controlled by the received command. For example, within a FAM that is configured to perform an exact match operation, the FAM's exact match operation can be parameterized to define the key(s) that the exact match operation will be run against. In this way, a FAM that is configured to perform an exact match operation can be readily rearranged to perform a different exact match operation by simply loading new parameters for one or more different keys in that FAM.

Once a FAM has been arranged to perform the data processing operation specified by a received command, that FAM is ready to carry out its specified data processing operation on the data stream that it receives from the firmware socket module. Thus, a FAM can be arranged through an appropriate command to process a specified stream of data in a specified manner. Once the FAM has completed its data processing operation, another command can be sent to that FAM that will cause the FAM to re-arrange itself to alter the nature of the data processing operation performed thereby. Not only will the FAM operate at hardware speeds (thereby providing a high throughput of data through the FAM), but the FAMs can also be flexibly reprogrammed to change the parameters of their data processing operations.

The FAM chain 350 preferably comprises a plurality of firmware application modules (FAMs) 350a, 350b, ... that are arranged in a pipelined sequence. However, it should be noted that within the firmware pipeline, one or more parallel paths of FAMs 350i can be employed. For example, the firmware chain may comprise three FAMs arranged in a first pipelined path (e.g., FAMs 350a, 350b, 350c) and four FAMs arranged in a second pipelined path (e.g., FAMs 350d, 350e, 350f, and 350g), wherein the first and second pipelined paths are parallel with each other. Furthermore, the firmware pipeline can have one or more paths branch off from an existing pipeline path. A practitioner of the present invention can design an appropriate arrangement of FAMs for FAM chain 350 based on the processing needs of a given application.

A communication path 430 connects the firmware socket module 404 with the input of the first one of the pipelined FAMs 350a. The input of the first FAM 350a serves as the entry point into the FAM chain 350. A communication path 432 connects the output of the final one of the pipelined FAMs 350m with the firmware socket module 404. The output of the final FAM 350m serves as the exit point from the FAM chain 350. Both communication path 430 and communication path 432 are preferably multi-bit paths.

The nature of the software and hardware/software interfaces used by appliance 200, particularly in connection with data flow into and out of the firmware socket module are described in greater detail in the above-referenced and incorporated U.S. Patent Application Publication 2007/0174841.

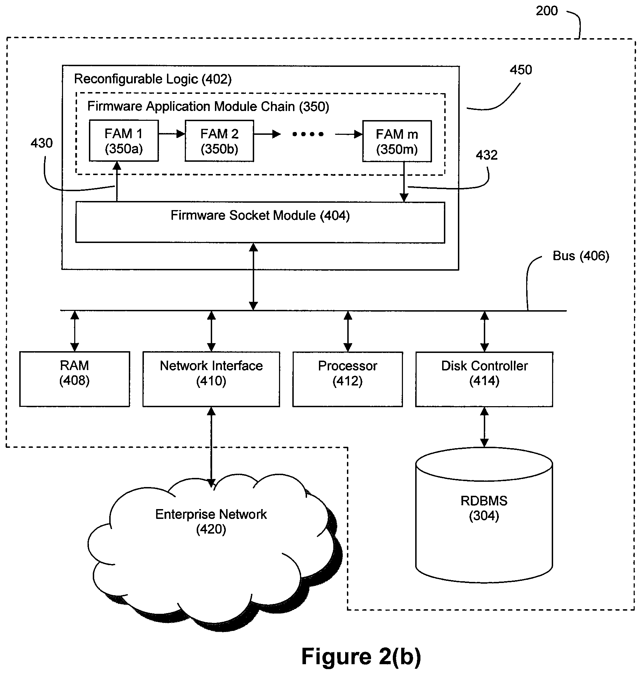

Figure 2(b) depicts another exemplary embodiment for appliance 200. In the example of Figure 2(b), appliance 200 includes a relational database management system 304 that is in communication with bus 406 via disk controller 414. Thus, the data that is streamed through the coprocessor 450 may also emanate from RDBMS 304. Furthermore, the metadata generated by coprocessor 450 can be stored as structured data within RDBMS 304 from which it can be used as an index for various data searching/analysis operations. Such indexes can take the form of B-tree indexes. An example of such usage for the appliance 200 of Figure 2(b) is described in the U.S. patent application US2008114724 A1, entitled "Method and System for High Performance Integration, Processing and Searching of Structured and Unstructured Data Using Coprocessors".

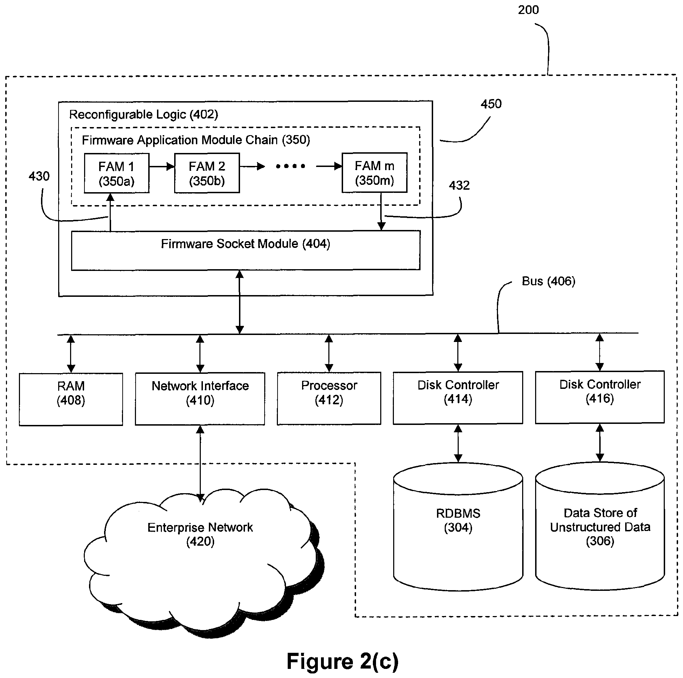

Figure 2(c)depicts another exemplary embodiment for appliance 200. In the example of Figure 2(c), appliance 200 also includes a data store 306 of unstructured data that is in communication with bus 406 via disk controller 416. Thus, the data that is streamed through the coprocessor 450 may also emanate from data store 306. Furthermore, the unstructured data that is streamed through coprocessor 450 to generate metadata therefor can optionally be stored within data store 306. As described in U.S. patent application US2008114724 A1, entitled "Method and System for High Performance Integration, Processing and Searching of Structured and Unstructured Data Using Coprocessors", the metadata tables within RDBMS 304 can be used to render data search/analysis operations on the unstructured data stored within data store 306 more efficient.

Figure 3(a) depicts a printed circuit board or card 700 that can be connected to the PCI-X or PCI-e bus 406 of a commodity computer system for use as a coprocessor 450 in appliance 200 for any of the embodiments of Figures 2(a) - (c). In the example of Figure 3(a), the printed circuit board includes an FPGA 402 (such as a Xilinx Virtex II FPGA) that is in communication with a memory device 702 and a PCI-X bus connector 704. A preferred memory device 702 comprises SRAM and DRAM memory. A preferred PCI-X or PCI-e bus connector 704 is a standard card edge connector.

Figure 3(b) depicts an alternate configuration for a printed circuit board/card 700. In the example of Figure 3(b), a bus 706 (such as a PCI-X or PCI-e bus), one or more disk controllers 708, and a disk connector 710 are also installed on the printed circuit board 700. Any commodity disk interface technology can be supported, as is understood in the art. In this configuration, the firmware socket 404 also serves as a PCI-X to PCI-X bridge to provide the processor 412 with normal access to any disk(s) connected via the private PCI-X bus 706. It should be noted that a network interface can be used in addition to or in place of the disk controller and disk connector shown in Figure 3(b).

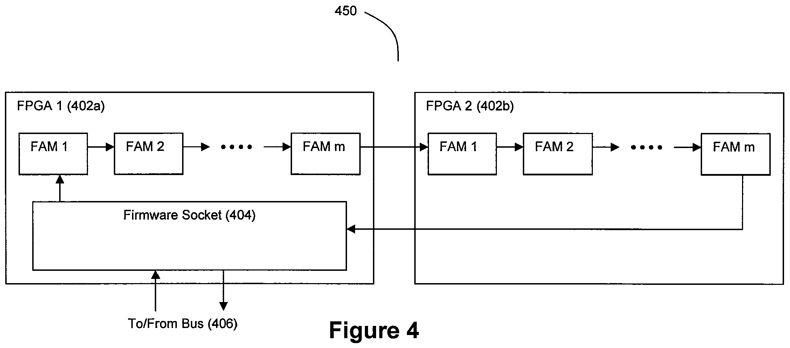

It is worth noting that in either the configuration of Figure 3(a)or 3(b), the firmware socket 404 can make memory 702 accessible to the bus 406, which thereby makes memory 702 available for use by an OS kernel as the buffers for transfers to the FAMs from a data source with access to bus. It is also worth noting that while a single FPGA 402 is shown on the printed circuit boards of Figures 3(a) and (b), it should be understood that multiple FPGAs can be supported by either including more than one FPGA on the printed circuit board 700 or by installing more than one printed circuit board 700 in the appliance 200. Figure 4 depicts an example where numerous FAMs in a single pipeline are deployed across multiple FPGAs.

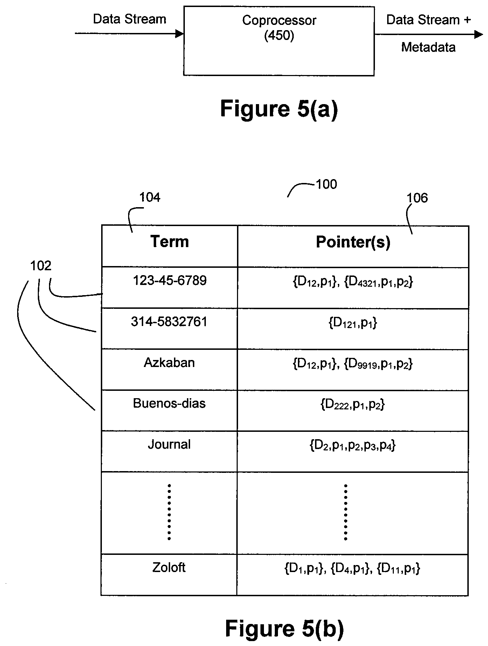

Figure 5(a) depicts at a high level a coprocessor 450 that receives an incoming data stream, generates metadata for the data stream, and outputs the data stream together with the generated metadata. Examples of different hardware-accelerated metadata generation operations will be described in greater detail hereinafter. Any of a number of text mining and text analytic operations can be employed to generate metadata. Some examples of metadata generation operations include but are not limited to part-of-speech tagging, information and entity extraction, document classification, document clustering, and text summarization. In these examples, the data stream under consideration will be a stream of documents. As noted, this usage in only exemplary as data streams other than documents can be readily processed using coprocessor 450 and the techniques described herein. These data streams may comprise unstructured and/or structured data.

Figure 5(b) depicts an exemplary index 100 that can built from the metadata generated by coprocessor 450. As described in connection with Figure 1, each table entry 102 comprises a term 104 and its associated pointer 106. In the example of Figure 5(b), each pointer 106 comprises a document identifier Dᵢ and one or more position identifiers pᵢ. Each document identifier identifies a document in which the term 104 corresponding to that pointer 106 is present. Each position identifier in the pointer identifies a position within the identified document where that term 104 is located. Preferably, the position identifier is represented by a byte offset relative to the start of a document. Thus, the pointers for the term "Azkaban" in Figure 5(b) establish that "Azkaban" can be found in Document D₁₂ at position p₁ and in Document D₉₉₁₉ at positions p₁ and p₂. Any of a number of well-known techniques can be used to map pointers such as the ones shown in Figure 5(b) to the documents stored within a file system of an enterprise.

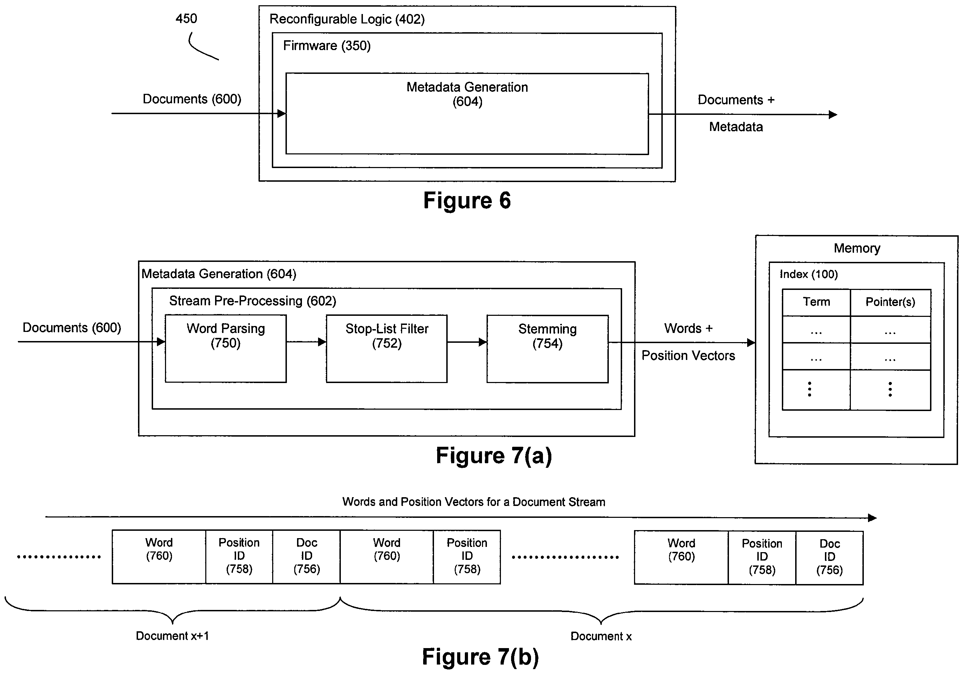

Figure 6 depicts exemplary firmware 350 that can be employed in reconfigurable logic 402 to perform a metadata generation operation 604 on an incoming stream of documents 600. An example of a metadata generation operation 604 includes a stream pre-processing operation 602. The stream pre-processing preferably comprises various position and feature vector extraction operations. These operations may employ techniques known in the art as cryptographic hashing to provide the term descriptor and tables to enables the values and lists described herein to be generated and exploited.

Figure 7(a) depicts an exemplary sequence of processing modules for the stream pre-processing stage 602. A word parsing module 750 preferably operates to identify white-space and/or punctuation delimited terms in the documents and record their positions. These recorded positions can then be used to help determine word positions within documents (e.g., the pᵢ values in the pointers of Figure 5(b)). A stop list filter module 752 preferably operates to remove words from the document stream that appear on a stop list. This may be desirable to remove common words (e.g. "the", "a", "an") for which indexing may not be particularly helpful from the document stream. The stop list is preferably adjustable to control which words will be removed from the document stream. A stemming module 754 preferably operates to stem words in the document stream to their roots. Examples of stemming operations include removing plurals, removing prefixes, removing suffixes, removing gerunds, etc. It should also be noted that other processing modules can be included in stream pre-processing module 602 if desired. For example, a spell-checking module can be used to correct possible spelling errors that exist within a word stream.

Figure 7(b) depicts an exemplary output data stream from the stream pre-processing operation 602, wherein the stream includes the parsed words 760 such that each parsed word is accompanied by a position identifier 758 for that word. Furthermore, a document identifier 756 is present that identifies when a new document is present within the stream. While the example of Figure 7(b) shows a serial stream of such data, it should be noted that the document identifiers 756 and position identifiers 758 can flow in bit streams within firmware 350 that are parallel to a bit stream of words 760.

Returning to Figure 7(a), as words stream through the pre-processing module 602, a memory containing an index for the documents can be generated. This index 100 can serve as a general index that is populated with entries for each different word encountered by the stream pre-processing module 602 together with its associated position vector information (e.g., document identifier and position identifier as shown in Figure 5(b)). If a word that has already been added to general index 100 is encountered again within the stream, then the pointer information in index 100 for that word can be updated to reflect the latest position at which the word has been found.

It should be noted that the memory used to store the index 100 as words stream through the pre-processing module 602 can be located in any of a number of places. For example, this memory can be located in the available on-chip memory of the FPGA 402. This memory could also be memory device 702 shown in Figures 3(a) and (b). Further still, this memory could be RAM 408. This memory could even be a location such as RDBMS 304. Preferably, coprocessor 450 performs the action of updating index 100. Techniques such as hashing can be used to insert new data into the index 100.

It should be noted that each of the modules shown in Figure 7(a) as well as the stream pre-processing operation 602 itself is an optional feature. If desired, the metadata generation operation 604 can be performed on documents 600 that have not been pre-processed.

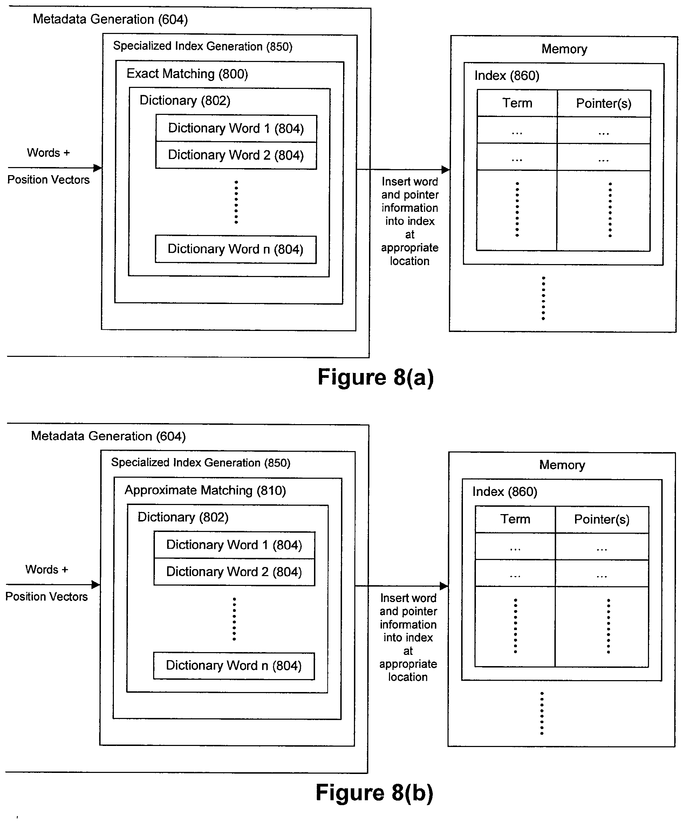

Figure 8(a) depicts an exemplary embodiment for the metadata generation operation 604 wherein a specialized index generation operation 850 is also performed. In Figure 8(a), words and position vectors stream into an exact matching module 800. This exact matching module 800 is loaded with the words 804 from a dictionary 802. The exact matching modules will use words 804 as keys against which the streaming words are compared to determine whether any exact matches exist therebetween. As matches are found by module 800, a specialized index 860 maintained in the memory is updated with the matching word information and the corresponding pointers for those matching words (see Figure 5(b)). The position vectors found by the stream pre-processing operation 602 (e.g., document identifiers 756 and position identifiers 758) can be used as the pointer information. Thus, in addition to the general index 100 described in connection with Figure 7(a), a specialized index 860 (that is specific as to dictionary 802) can also be efficiently generated via the data processing operations of coprocessor 450.

Any of a number of exact matching techniques can be used to perform the exact matching operation. For example, the hardware-accelerated matching techniques disclosed in U.S. Patents 6,711,558 and 7,139,743 and U.S. Patent Application Publications 2006/0294059, 2007/0130140, and U.S. Patent Application publication entitled "Method and Apparatus for Approximate Pattern Matching" (published from U.S. Application Serial No. 11/381,214, filed May 2, 2006).

Any collection of words can be used as dictionary 802. Examples of dictionaries 802 that can be used include large word collections such as full English language dictionaries, full foreign language dictionaries, scientific/technical dictionaries, etc. Smaller word collections can also be used.

Figure 8(b) depicts an alternate embodiment for index generation wherein an approximate matching module 810 is used rather than an exact matching module. It may be desirable to employ an approximate matching module 810 for the index generation operation 850 to reduce the likelihood that spelling errors and the like do not result in document text being mis-indexed. Examples of hardware-accelerated approximate matching techniques suitable for use as approximate matching module 810 are also disclosed in U.S. Patents 6,711,558 and 7,139,743 and U.S. Patent Application Publications 2006/0294059, 2007/0130140, and U.S. Patent Application publication entitled "Method and Apparatus for Approximate Pattern Matching" (published from U.S. Application Serial No. 11/381,214, filed May 2, 2006). It should be noted that if a spell-checking module as described above is used in the stream pre-processing stage, it may be unnecessary to employ an approximate matching module to accommodate mis-spellings and the like.

It should also be noted that a plurality of exact matching/approximate matching modules 800/810 can be deployed in parallel to distribute the workload of matching streaming words to the word keys 804 across multiple matching modules 800/810. However, if desired, a single serial pipelined sequence of compare registers can be used by an matching module 800/810 to sequentially compare the streaming words with word keys 804 if desired.

It should be noted that, like the memory used to store general index 100, the memory used to store the specialized indexes 860 can be located in any of a number of places (e.g., the on-chip memory of the FPGA 402, memory device 702, etc.).

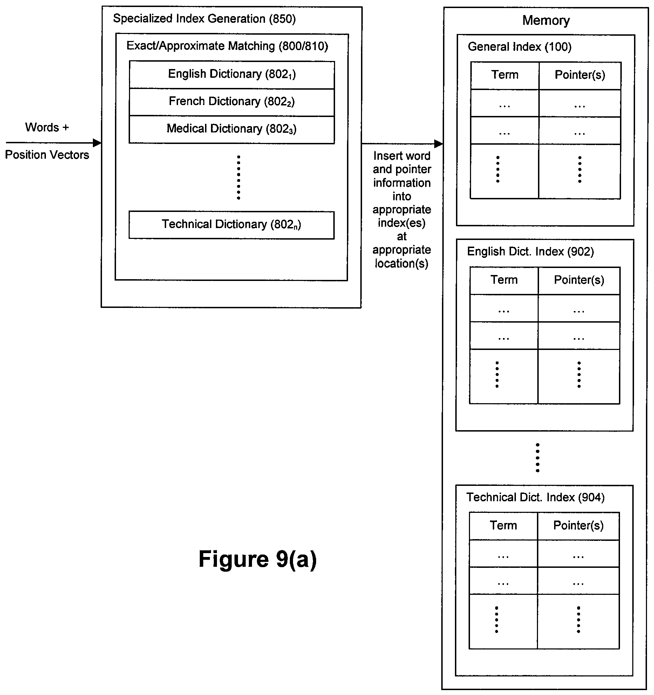

A powerful aspect of various embodiments of the present invention is the ability to concurrently generate multiple specialized indexes. An example of this is shown in Figure 9(a). With this embodiment, the matching module 800/810 matches the incoming words against multiple dictionaries 802ᵢ, each dictionary 802ᵢ having its own collection of words which will serve as the keys against which the incoming words are judged. As shown, the words within dictionaries such as an English dictionary, a French dictionary, a medical dictionary, and a technical dictionary can be compared against the incoming word stream. As matches are found between the incoming words and the words within any of these dictionaries, a specialized index associated with each of these dictionaries can be updated with pointer information. Figure 9(a) depicts an English dictionary index 902 and a technical dictionary index 904 as examples of such specialized indexes. Preferably, these specialized indexes are pre-populated in the term column with all of the words within its associated dictionary. As that term is found within the word stream by the matching module 800/810, the pointer information for that term can be updated as appropriate.

The general index 100 in such an embodiment can be updated when words streaming through the exact matching module do not find a match in any of the dictionaries 802. Furthermore, the entries in the other specialized indexes can be merged into the general index if desired to thereby make general index 100 applicable to all of the words within document stream 600. This merger can be performed offline or concurrently with the updating of the other indexes. Otherwise, the coprocessor 450 can be configured to update the general index 100 as words stream out of the stream pre-processing module 602 and update the specialized indexes as words stream out of the exact/approximate matching module 800/810.

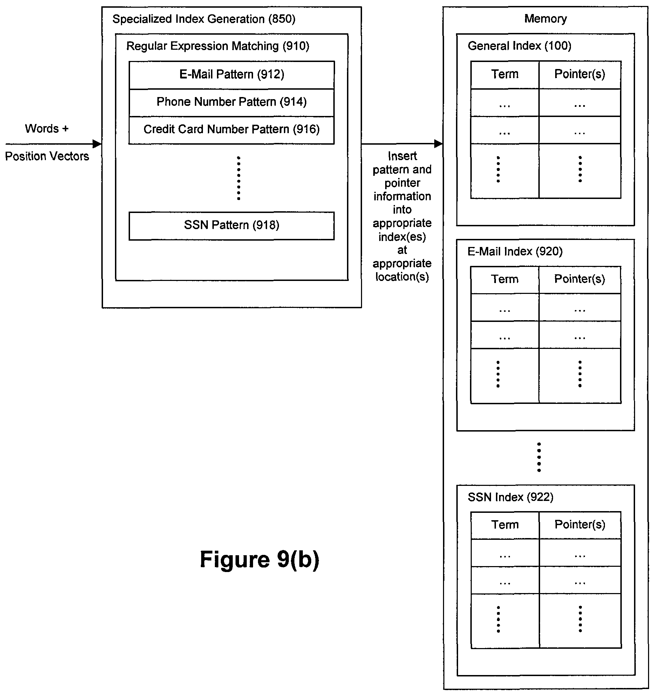

Another powerful aspect of various embodiments of the present invention is the ability to perform regular expression pattern matching on incoming words. An example of this is shown in Figure 9(b). Regular expressions, as is well-known in the art, can be used to detect patterns of varying degrees of complexity within a word stream. An exemplary pattern for which regular expressions are useful means of detection is a social security number (SSN). SSNs exhibit the pattern xxx-xx-xxxx, wherein x can be any number between 0 and 9. Items such as phone numbers, credit card numbers, primary account numbers (PANs), e-mails, URLs, and others also exhibit patterns that are detectable through regular expressions.

As shown in Figure 9(b), a regular expression matching module 910 can be deployed on coprocessor 450 (preferably in firmware 350 on a reconfigurable logic device 402). The regular expression matching module 910 can be configured to detect one or more user-defined patterns. For example, the regular expression matching module 910 in Figure 9(b) is configured to detect words (including word portions) that exhibit an e-mail pattern 912, a phone number pattern 914, a credit card number pattern 916, and an SSN pattern 918. As these patterns are found within the word stream by the regular expression matching module 910, a specialized index associated with each of these patterns can be updated with the content of the matching pattern and with the pointer information for that matching pattern. Figure 9(b) depicts an e-mail index 920 and a SSN index 922 as examples of such indexes. Thus, if 123-45-6789 is encountered in the word stream, then the regular expression matching module 910 will identify this pattern as a SSN pattern, and the regular expression matching module 910 will add an entry to the SSN index 922 comprising the term "123-45-6789" and a pointer to that term in the word stream. Preferably, as described in connection with Figure 9(a), a general index 100 is also updated as words stream through the regular expression matching module 910, and the regular expression matching module 910 does not find any pattern matches.

An example of a hardware-accelerated regular expression matching technique suitable for use as regular expression matching module 910 is disclosed in the above-referenced and incorporated U.S. Patent Application Publication 2007/0130140.

Also, as noted above in connection with the matching modules 800/810, various combinations of sequential and parallel regular expression matching modules 910 can be employed within coprocessor 450 to distribute the pattern matching workload across multiple resources.

The power of such pattern indexes shown by Figure 9(b) cannot be understated. It is typically extremely difficult for a person within an enterprise to efficiently get an answer to a question such as "Which documents within our enterprise include a SSN?" or a command such as "Show me all documents within our enterprise that include a credit card number". Similarly, it is difficult for a web search engine to provide relevant results to an Internet search query seeking to find web pages which contain credit card numbers or SSNs without being specific as to individual numbers. However, through the indexing techniques disclosed in connection with Figure 9(b), the answers to questions such as these are readily available.

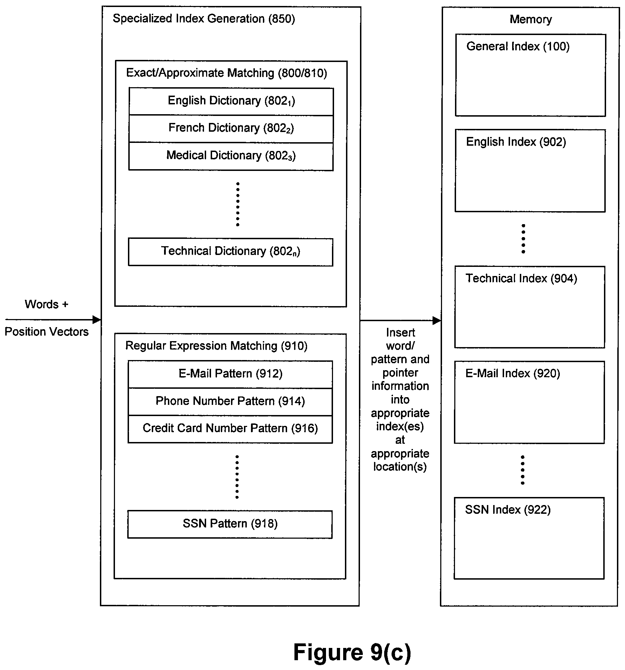

Figure 9(c) illustrates an exemplary embodiment wherein the hardware-accelerated index generation operation 850 includes one or more exact/approximate matching modules 800/810 and one or more regular expression matching modules 910 to generate corresponding specialized indexes (e.g., indexes 902, 904, 920, and 922) and a general index 100. Once again the power of such efficiently-generated indexes cannot be understated. These indexes can serve to answer complicated query commands such as "Show me all documents which include a credit card number and contain the word 'stolen'" without re-analyzing the entire set of documents 600.

It should be noted that coprocessor 450 is preferably configured to change the dictionaries and/or patterns used by the matching modules 800/810/910. Preferably, such changes are made in response to user commands received as command data by the firmware socket module 404. These changes may comprise adding/removing dictionaries/patterns and/or adding/removing words to/from the various dictionaries.

It should also be noted that the coprocessor 450 can deploy these modules 800/810 and 910 in a sequential, parallel, or hybrid sequential-parallel arrangement as desired.

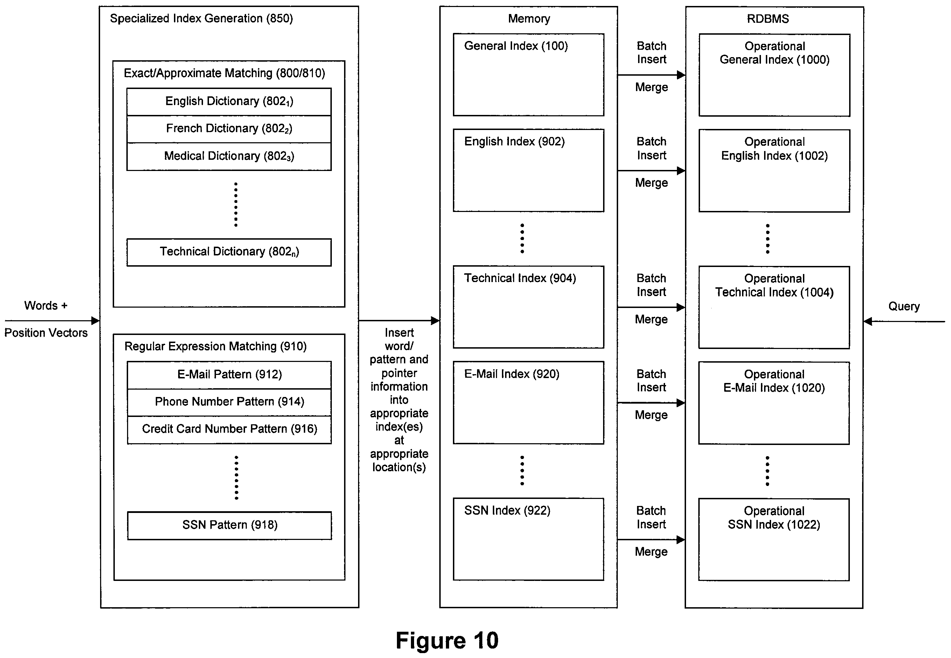

Figure 10 depicts an embodiment wherein periodic batch transfers of the generated indexes (e.g., indexes 100, 902, 904, 920, and 922) are performed to merge them into their corresponding operational counterparts within an RDBMS (e.g., RDBMS 304 or some other RDBMS within enterprise network 420). Thus, batch insert/merge operations can be performed to insert the content of general index 100 into operational general index 1000. Similarly, the content of indexes 902, 904, 920, and 922 can be inserted into operational indexes 1002, 1004, 1020, and 1022 respectively. These transfers can be performed periodically at scheduled intervals or can be performed on an as needed basis as the available memory space for indexes 100, 902, 904, 920, and 922 runs low.

After the operational indexes have been updated, the newly indexed data can then be accessed via standardized queries such as SQL commands that are applied to the operational indexes stored by SQL databases.

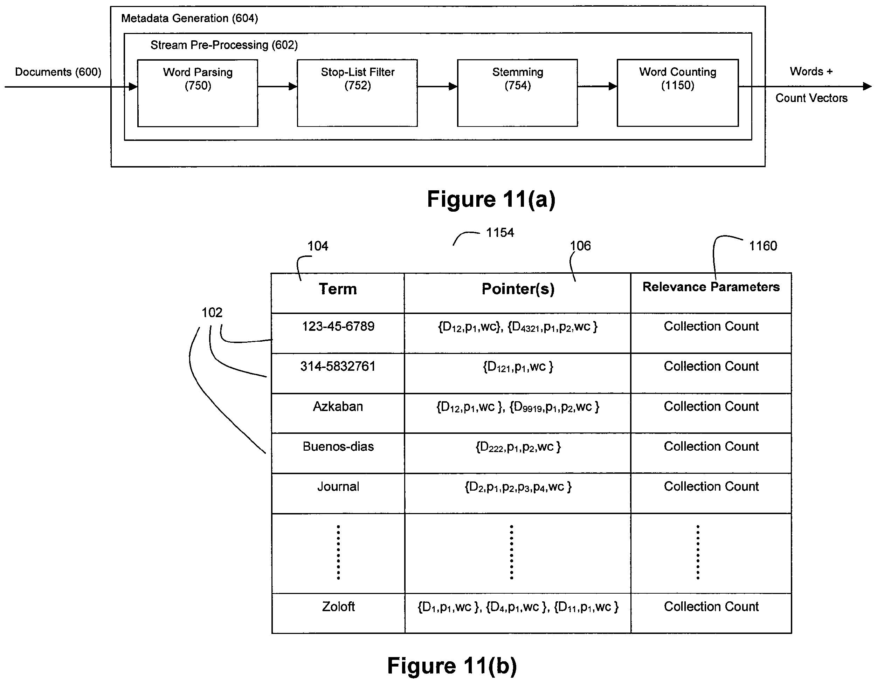

Another metadata generation operation that can be performed by the stream pre-processing module 602 is a word counting operation 1150, as shown in Figure 11(a). In order to ascertain the relevance of the documents 600 during a query handling operation, the indexing engine preferably obtains statistical information about the words in the documents. This statistical information may includes a count of the number of times a particular word appears in a document and a count of the number of times a particular word appears in the entire document collection (should the documents 600 be grouped into one or more collections). Another parameter that can be determined and used for relevance assessments is the size (in words or bytes) of each document. By knowing these parameters, the relevance of a document retrieved during querying can be calculated using well-known probabilistic relevance models such as the Okapi BM25 model. See Karen Spärck Jones, Steve Walker, and Stephen E. Robertson. "A Probabilistic Model of Information Retrieval: Development and Comparative Experiments (parts 1 and 2).", Information Processing and Management, 36(6): 779-840, 2000.

Through a word counting module 1150, word lists for documents and document collections are generated as the words stream therethrough. Associated with each word on the list will be a count value that is incremented each time the associated word is encountered in the stream. Figure 11(b) depicts an exemplary index 1154 wherein the pointers 106 include a word count parameter wc that identifies how many times each term appears in the referenced document. These pointers may also include parameters that identify the size of each document (although this information can be maintained in a separate index table). Table 1154 may also include an additional column 1160 that includes a "collection count" parameter that identifies how many times each term appears in a document collection. Appropriate flags can be added to the bits in the word and position vector stream to identify collection separations. Because the output from the word counting module preferably includes this count information, Figure 11(a) depicts the output from the word counting module 1150 as including count vectors.

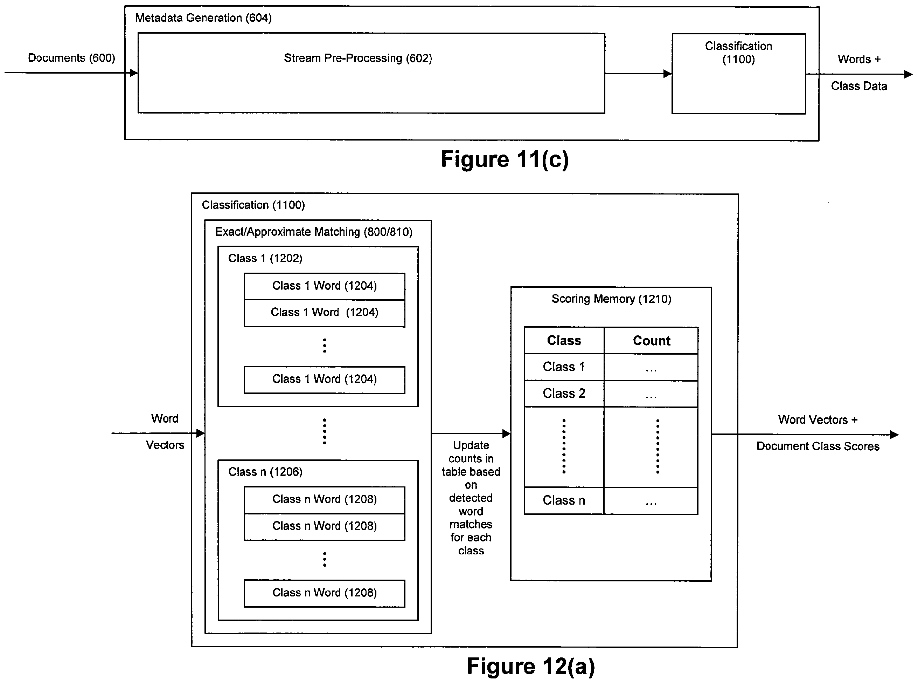

Another metadata generation operation 604 that can be performed by coprocessor 450 is a classification operation 1100. An exemplary pipeline for such actions is shown in Figure 11(c). An example of a document classification operation that can be performed on documents includes language classification. With language classification, the document can be applied to a statistical n-gram algorithm that is configured to identify the language that the text within the document most closely matches. See William B. Cavnar and John M. Trenkle, "N-Gram-Based Text Categorization", Proceedings of SDAIR-94, 3rd Annual Symposium on Document Analysis and Information Retrieval, Las Vegas, pages 161-175, 1994. Other document classification operations may employ hidden Markov models (HMMs) to learn some type of classification for the document. See Ludovic Denoyer, Hugo Zaragoza and Patrick Gallinari, "HMM-based Passage Models for Document Classification and Ranking", Proceedings of ECIR-01, 23rd European Colloquium Information Retrieval Research, Darmstatd, DE, pages 126-135, 2001.

Figure 12(a) depicts an exemplary classification operation wherein a list of words is maintained for a plurality of different classes. For example, a first class 1202 is associated with words 1204 and so on such that class n 1206 is associated with words 1208. These words can be used by one or more matching modules 800/810 as keys that are compared against incoming words. As the key words find a match to a word within a document, a scoring memory 1210 that tracks a count of matches for each class can be updated as appropriate. Thus, when the matching module 800/810 finds a match between a given word within Document X and a word 1204 within the first class 1202, then the "count" field for class 1 in the scoring memory 1210 associated with that document can be updated. These counts can serve as class scores for each document to thereby indicate how relevant a given document is to a particular class. Preferably, the scoring memory 1210 is refreshed upon encountering a new document in the word stream. Scoring memory 1210 is preferably maintained in the available on-chip memory of the FPGA 402 or in memory device 702 (see Figures 3(a) and (b)).

The different classes can pertain to classifications such as "news", "sports", "legal", "medicine", etc. The words within each class can be words that are generally expected to be found in a document that pertains to the subject defined by the class. For example, the word "baseball" may be present in the word list for a "sports" classification, and the word "estop" may be present in the word list for a "legal" classification. Another exemplary document classification can be language classification. In such an application, each class shown in Figure 12(a) can be associated with a different language, wherein the words within each class would comprise a full (or redacted) dictionary for that language. With reference to the embodiment of Figure 9(a), it can be understood that such language classification operations can function as an adjunct to specialized indexing, wherein the matching operations shown in Figure 9(a) can also operate to update a scoring memory 1210 as appropriate. Yet another exemplary document classification can be "reading comprehension level". Each class can be associated with a different comprehension level (e.g., "5^{th} grade reading level", "high school freshman reading level", "undergraduate reading level", etc.), and the words within each class can be words expected to be encountered in documents belonging to the corresponding comprehension level. It should be noted that the count vector information produced by the word counting module of Figure 11(a) may be helpful in aiding classifications such as "comprehension level".

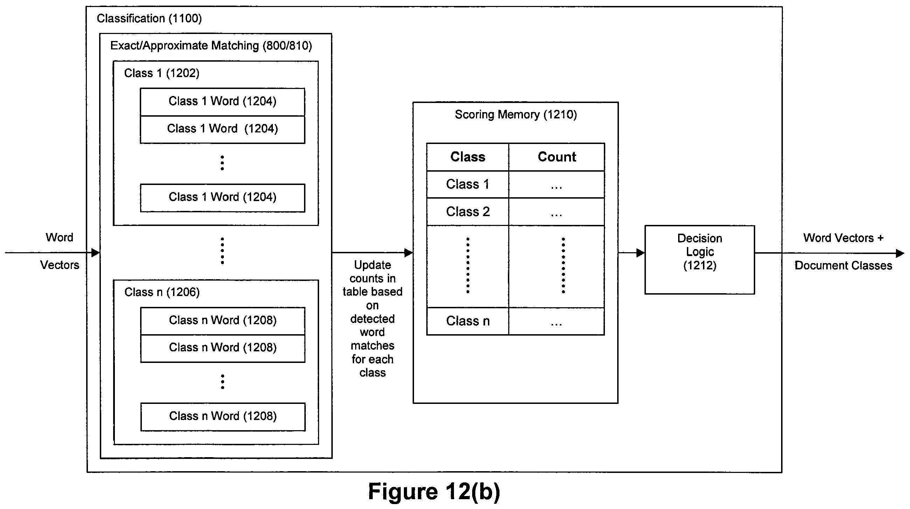

Figure 12(b) depicts an exemplary classification embodiment wherein decision logic 1212 is employed to assign one or more classes to a document based on the class counts for that document as recorded by scoring memory 1210. For example, each class can have an associated threshold value. If the class count meets or exceeds the threshold value for its class, then the document can be tagged as belonging to that class. As such, it may be possible for the same document to belong to multiple classes should its counts in those classes meet or exceed the classes' assigned threshold values.

Furthermore, it should be noted that one or more regular expression matching modules 910 can be advantageously employed in connection with classification operation 1100 (possibly in combination with one or more matching modules 800/810). For example, if a document is found to contain a credit card number, then an inference could possibly be drawn that the document should be classified as a "sales record", "personal record", or the like. Regular expression matching can also be useful to generate counts of how many words have particular character lengths. For example, the regular expression "xxxx" where x can be any character can be used to update a count of 4 letter words, while the regular expression "xxxxx" can be used to update a count of 5 letter words, and so on. Such word length counts can be useful for assessing classifications such as "comprehension level" discussed above.

The classification module 1100 may be used to enrich the word stream emanating from the module 1100 by adding bit strings for each document to the stream, wherein each bit string tags each document as belonging to a particular class. For example, if the classification module is configured to determine which of 20 classifications a document belongs to, a 20 bit string can be added to the output stream for each document, wherein each bit is associated with a particular classification and flags whether the document belongs to that classification. As such, bit X in this bit string can be set aside to flag whether the document contains a credit card number. Thus, if a regular expression matching module 910 detects the presence of a credit card number pattern within a document, the bit string for that document can be updated to set bit X to high. Similarly, bit Y in the bit string can be set aside to flag whether the document is a legal document. If the classification operation results in a determination that the document should be considered a legal document, then bit Y can be set to high.

It should also be noted that classification operation 1100 can be considered as also belonging to the specialized index generation category of metadata generation operations because the classification information produced by classification operation 1100 can also be used to generate specialized indexes of documents by class. Such indexes can serve as powerful searching aids in that they can be used to answer questions such as "How many Spanish language documents are within the enterprise?" and conduct research such as "What relationships exist between sports and medicine?" and "Find all legal documents in which John Smith is mentioned".

Also, it should be noted that the classification operation can be performed in software (e.g., software executed by processor 412) using the general and specialized indexes generated from embodiments such as those shown in Figures 9(a)-(c). These different indexes can be cross-correlated with pre-defined word lists for the different classes to determine the classification information for each document.

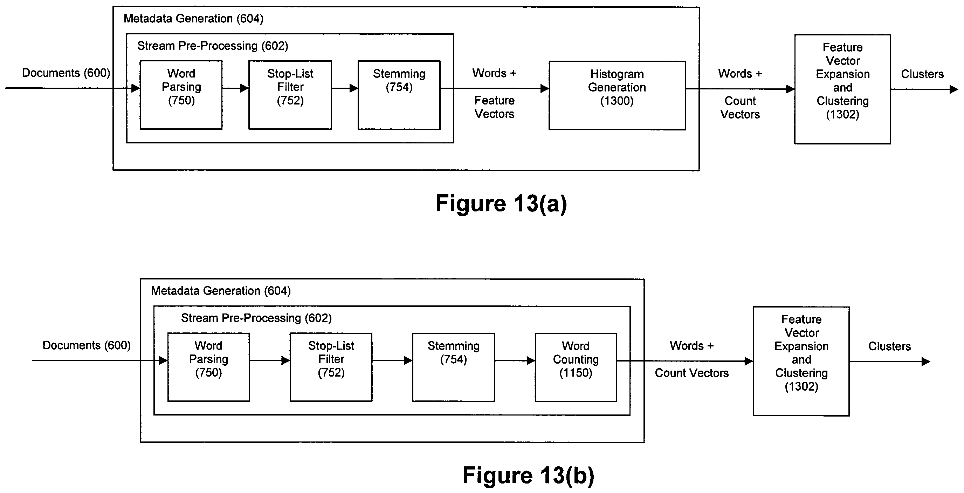

With reference to Figure 13(a), and following from Figure 11(a), another metadata generation operation 604 that can be performed by coprocessor 450 is a histogram generation operation 1300 to thereby aid document clustering. With document clustering, it is desired to know the relevance of different documents to each other. To aid such clustering determinations, the coprocessor 450 can be configured to perform the histogram generation operation 1300 on documents 600 (wherein this operation can be similar if not identical to the word counting operation described above). These histograms can identify the frequency of words within a document. From the generated histograms, software can be used to perform feature vector expansion and identify document clusters (operation 1302) that are likely related to each other with respect to common subject matter, etc. Feature vector expansion is a standard technique wherein the feature vectors of individual documents are expanded to include words from all the documents in the collection. Clustering can be performed using any of the well-known techniques such as K-means clustering, fuzzy C-means clustering, hierarchical clustering, etc. See M. Steinbach, G. Karypis, and V. Kumar. "A *comparison of document clustering techniques.",* KDD Workshop on Text Mining, 2000, the entire disclosure of which is incorporated herein by reference..

Should the stream pre-processing module 602 already employ word counting, then the histogram generation stage 1300 can be omitted, as shown in Figure 13(b).

It should be noted that the clustering operations shown by Figures 13(a) and (b) can be considered as also belonging to the specialized index generation category of metadata generation operations because the clustering information can also be used to generate specialized indexes of documents by clusters. Such indexes can serve as powerful searching aids in that they can be used to answer questions such as "Which documents within an enterprise are similar to Document X?" and "Which books available for sale from this website are similar to Book X?".

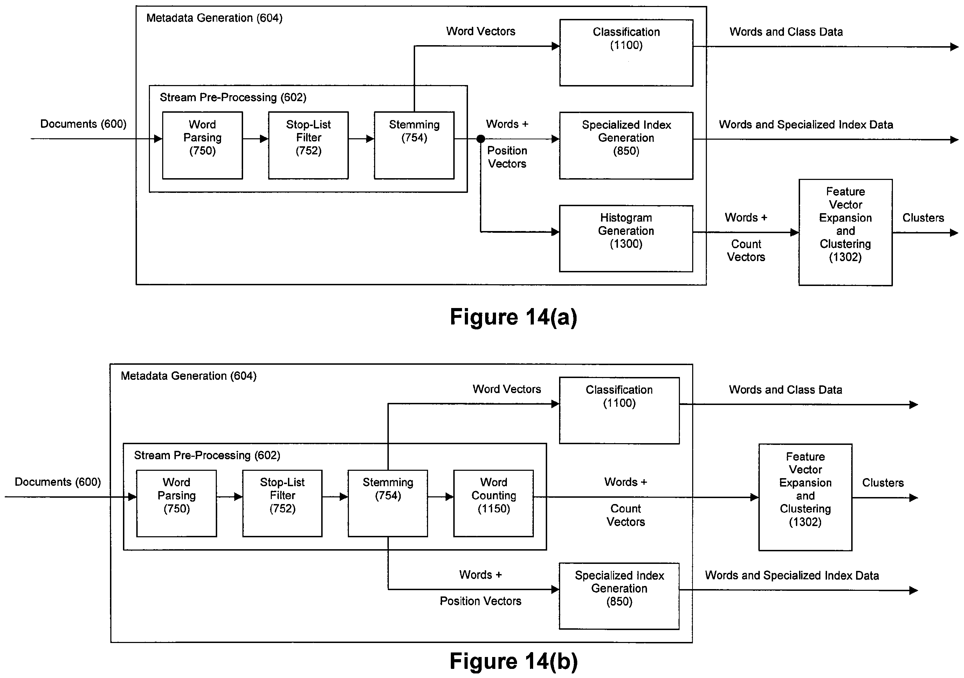

Figures 14(a) and (b) depict exemplary pipelines wherein the hardware-accelerated metadata generation operation 604 includes classification 1100, specialized index generation 850, and histogram generation 1300 (or word counting 1150).

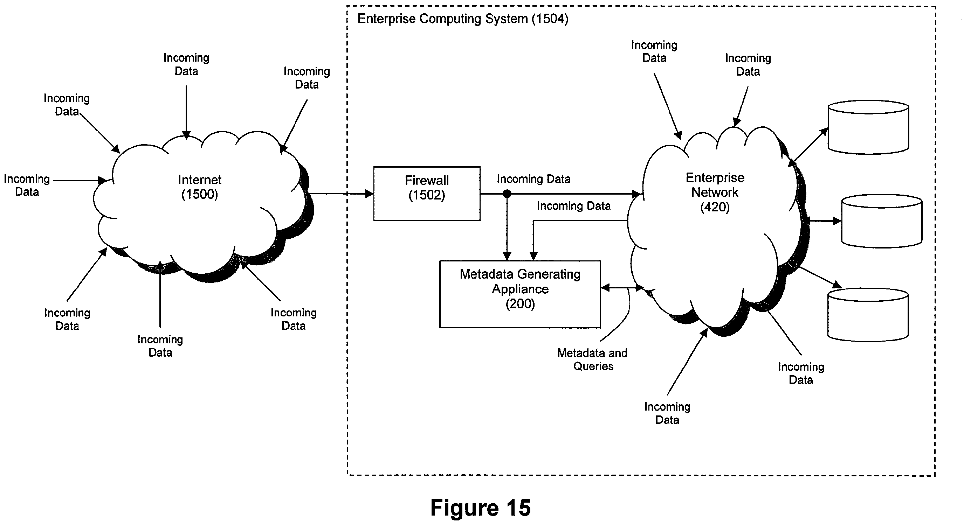

Figure 15 depicts an exemplary environment in which appliance 200 can be effectively employed. Figure 15 depicts an enterprise computing system 1504 that receives a large volume of incoming data from the Internet 1500. After this incoming data passes enterprise firewall 1502, it can be streamed through appliance 200 which taps into the firewall output. Appliance 200 can thus be used to generate metadata and indexes for the incoming data as that data reaches the enterprise and before it lands in data storage somewhere within enterprise network 420. The data processed by appliance 200 can also include data originating from within the enterprise computing system 1504. Furthermore, appliance 200 can optionally be configured to output its generated metadata for delivery to other repositories within enterprise network 420. Further still, queries can optionally be applied to appliance 200 to conduct full-text searching or other data analysis operations on data indexed by appliance 200. As noted, an example of such a use for appliance 200 is disclosed in the U.S. patent application US2008114724 A1, entitled "Method and System for High Performance Integration, Processing and Searching of Structured and Unstructured Data Using Coprocessors".

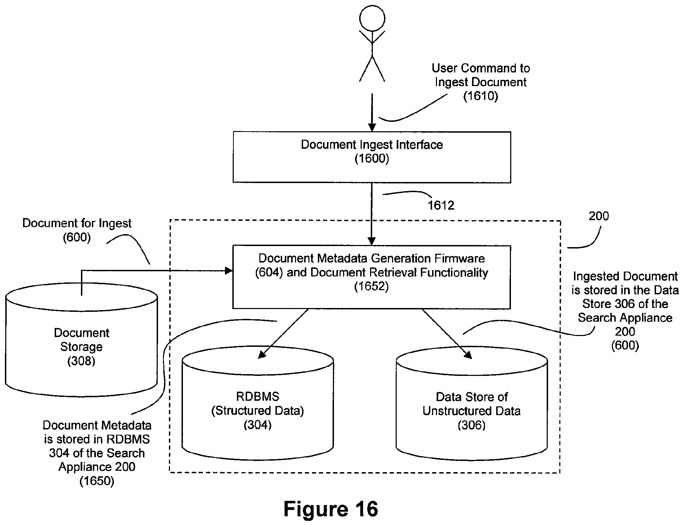

Figure 16 depicts an overview of document ingest pre-processing in accordance with an embodiment where appliance 200 is used to index documents within an enterprise. Preferably, through some form of document ingest GUI 1600 displayed on a user computer within enterprise network 420, the user is able to specify which document(s) should be ingested into data store 306 of Figure 2(c). Optionally, the user can also key in various forms of metadata about the document(s) to be ingested; however this need not be the case as the coprocessor 450 will be arranged to perform the desired metadata generation operations automatically, as described above. In response to an appropriate command 1612 delivered to appliance 200 from GUI 1600, one or more documents 600 stored in a data store 308 accessible through the enterprise network 420, but external to the appliance 200, is delivered to the appliance 200. Various adapters can be employed in document retrieval functionality 1652 employed by the appliance 200 to provide access to documents stored on common file systems such as NTFS, FAT, CIFS, various flavors of Unix file systems, as well as Web access over HTTP.

Should the coprocessor employ a reconfigurable logic device 402 with firmware 350 deployed thereon, FAMs resident in firmware pipeline 350 will be arranged to perform a document metadata generation operation on the documents it receives. Examples of these metadata generation operations are described above.

The document metadata 1650 that is produced by the operation of firmware 350 can then be stored in RDBMS 304, wherein the RDBMS engine operates to generate and maintain an index of this document metadata that can later be queried using standardized database queries to identify which documents within data store 306 should be processed through the coprocessor 450 at hardware speeds during query processing. After the received document 600 has been processed by firmware 350, document 600 can then be ingested into the appliance by storing it in the data store 306 of unstructured data. The acts of metadata generation and document ingestion preferably operate virtually concurrently in near-real time. It should be noted that the document metadata 1650 can optionally be stored in a structured database external to the appliance 200.

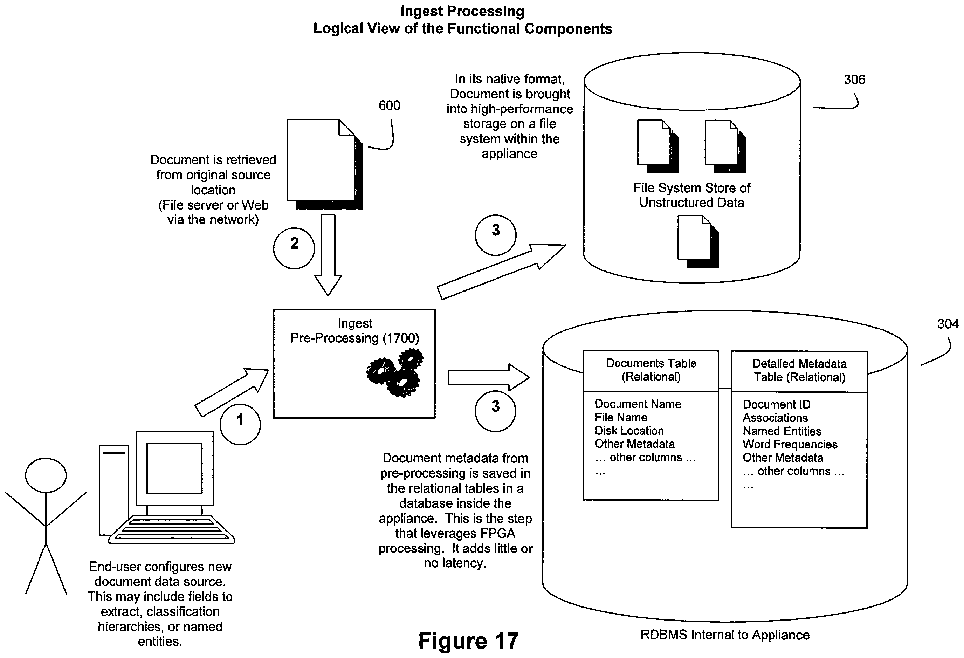

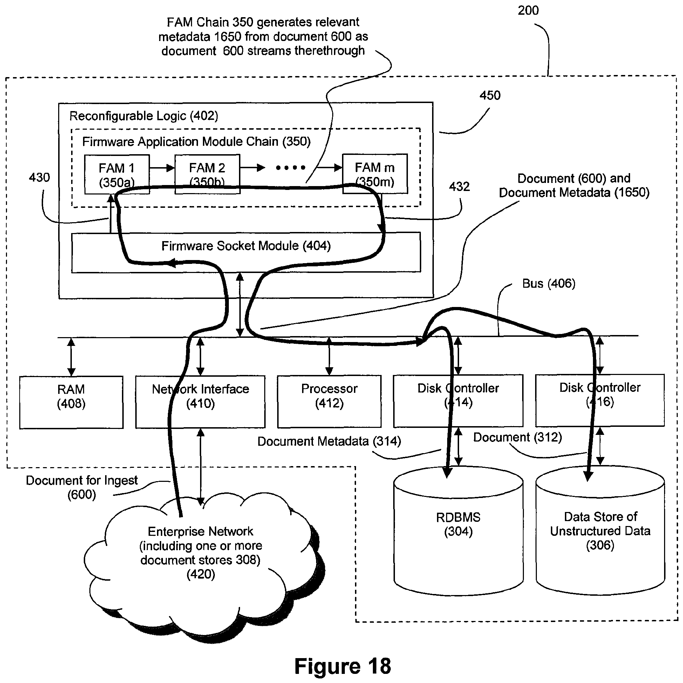

Figure 17 depicts this document ingest pre-processing 1700 as a logical flow. At step 1, the user interacts with GUI 1600 to identify a new document 600 for ingestion into appliance 200. GUI 1600 may optionally be configured to allow the user to specify what metadata is to be generated from document 600. Next, at step 2, the document 600 is retrieved from its original source location (either an enterprise document store 308, the Internet or some other network that is accessible to the enterprise network 420). Then, firmware 350 performs its document metadata generation operation 604 on document 600 to produce document metadata 1650. At step 3, the document 600 is then stored in the file system of data store 306, and the document metadata (including its location in the file system of data store 306) is saved into relational tables of the RDBMS 304. Figure 18 illustrates this data flow superimposed over the appliance 200 of Figure 2(c).

In this manner, appliance 200 can now use the document metadata 1650 indexed by RDBMS 304 to aid decisions as to which documents should be subjected to a query-specified data processing operation (e.g., a full-text searching operation) via coprocessor 450. Furthermore, because standardized RDBMS technology has been leveraged within appliance 200, standardized database queries that are well-known to a number of users can be used to decide which documents are to be subjected to the coprocessor-based data processing operation when processing a given query. This type of query processing is disclosed in U.S. patent application US2008114724 A1, entitled "Method and System for High Performance Integration, Processing and Searching of Structured and Unstructured Data Using Coprocessors".

While in the preferred embodiment disclosed herein the coprocessor 450 comprises a reconfigurable logic device 402 such as an FPGA, it should be noted that the coprocessor 450 can be realized using other processing devices. For example, the coprocessor 450 may comprise graphics processor units (GPUs), general purpose graphics processors, chip multi-processors (CMPs), dedicated memory devices, complex programmable logic devices, application specific integrated circuits (ASICs), and other I/O processing components. Moreover, it should be noted that appliance 200 may employ a plurality of coprocessors 450 in either or both of a sequential and a parallel multi-coprocessor architecture.

While the present invention has been described above in relation to its preferred embodiments, various modifications may be made thereto that still fall within the invention's scope. Such modifications to the invention will be recognizable upon review of the teachings herein. Accordingly, the full scope of the present invention is to be defined solely by the appended claims and their legal equivalents.

## Claims

1. An indexing method comprising:
streaming data through a reconfigurable logic device (402), wherein the reconfigurable logic device has firmware (350) deployed thereon;
the firmware generating metadata for the streaming data; and
the firmware generating a plurality of indexes (100) for the streaming data based on the generated metadata; and
wherein the metadata generating step further comprises performing a regular expression pattern matching operation (910) on the streaming data that is keyed by a plurality of pre-defined patterns (912, 914, ...), wherein each pre-defined pattern corresponds to a different one of the generated indexes.

2. The method of claim 1 wherein the metadata generating step further comprises performing an exact matching operation (800) on the streaming data that is keyed by a plurality of words in a plurality of dictionaries (804), wherein each dictionary corresponds to a different one of the generated indexes.

3. The method of claim 1 wherein the metadata generating step further comprises performing an approximate matching operation (810) on the streaming data that is keyed by a plurality of words in a plurality of dictionaries (804), wherein each dictionary corresponds to a different one of the generated indexes.

4. The method of any of claims 2 and 3 wherein a plurality of the generated indexes correspond to a plurality of the dictionaries and another plurality of the generated indexes correspond to a plurality of the pre-defined patterns.

5. The method of claim 1 wherein the streaming data comprises a plurality of data objects, the method further comprising:
the firmware pre-processing (602) the streaming data by (i) parsing the data objects into a plurality of words (760), (ii) generating a data object identifier (756) that corresponds to each data object, wherein each data object identifier is indicative of its corresponding data object's position within the streaming data, and (iii) generating a position identifier (758) that corresponds to each parsed word, wherein each position identifier is indicative of its corresponding word's position within the streaming data;
wherein the step of performing the regular expression pattern matching operation comprises the firmware performing regular expression pattern matching on the pre-processed streaming data with respect to a plurality of patterns to detect whether any pattern matches exist within the pre-processed streaming data; and
wherein the generating step comprises the firmware generating a plurality of pattern indexes for the detected pattern matches by (1) generating a plurality of terms (104) for the pattern indexes using the detected pattern matches, and (2) generating a plurality of pointers (106) for the pattern indexes based at least in part on the generated data object identifiers and the generated position identifiers for the detected pattern matches.

6. The method of claim 5 wherein the patterns comprise at least one member of the group consisting of a credit card number pattern, a social security number pattern, an email address pattern, a telephone number pattern, and an Internet uniform resource locator (URL) pattern.

7. The method of any of claims 5-6 wherein the streaming data comprises a plurality of web pages, and wherein a pattern index comprises a plurality of pointers to the web pages which contain the pattern corresponding to that pattern index, the method further comprising:
an Internet search engine receiving a pattern query; and
the Internet search engine looking up the web pages that are responsive to the pattern query based on at least one of the pattern indexes; and
the Internet search engine providing search results for the pattern query in response to the looking up step.

8. The method of claim 1 wherein the metadata generating step further comprises performing a classification operation (1100) on the streaming data.

9. The method of claim 1 wherein the metadata generating step further comprises performing a histogram generation operation (1300) on the streaming data, the method further comprising performing a clustering operation (1302) on the streaming data based on the generated histogram.

10. The method of claim 1 further comprising performing feature vector extraction (602) on the streaming data using the firmware.

11. The method of claim 1 further comprising merging the generated indexes with a plurality of operational indexes (1000, 1002, ...) stored by a relational database (304).

12. A system for generating metadata for data, the system comprising:
a main processor (412);
a coprocessor (450);
wherein the main processor is configured to direct a stream of data to the coprocessor, wherein the data stream comprises a plurality of data words (760); and
wherein the coprocessor is configured to (i) receive the data stream, (ii) perform a metadata generation operation (604) on the data stream to thereby generate metadata for the data stream, and (iii) concurrently generate a plurality of indexes (100) for the data stream based on the generated metadata;
wherein the coprocessor is configured with a regular expression pattern matching module (910), the regular expression pattern matching module having a plurality of pre-defined patterns (912, 914, ...) loaded thereon;
wherein the regular expression pattern matching module is configured to detect any pattern matches that exist between the words in the data stream and the pre-defined patterns; and
wherein the coprocessor is further configured to, in response to the detection of a pattern match between data in the data stream and a pre-defined pattern, update an entry in the generated index corresponding to that pre-defined pattern with a pointer (106) to the data within the data stream that is a pattern match to that pre-defined pattern.

13. The system of claim 12 wherein the coprocessor is further configured with an exact matching module (800), the exact matching module having a dictionary (804) loaded thereon, and wherein the exact matching module is configured to detect any exact matches that exist between the words in the data stream and a plurality of words in the dictionary, and wherein the coprocessor is further configured to, in response to the detection of an exact match between a word in the data stream and a word in the dictionary, update an entry in the generated index corresponding to that dictionary word with a pointer (106) to the data word within the data stream that is an exact match to that dictionary word.

14. The system of claim 13 wherein the exact matching module is further configured to detect any exact matches that exist between the words of the data stream and a plurality of words in a plurality of dictionaries, and wherein each of the dictionaries corresponds to a different one of the generated indexes.

15. The system of claim 13 wherein the coprocessor is further configured to generate a general index (100) for words within the data stream that are not exact matches to any of the words within any of the dictionaries.

16. The system of claim 12 wherein the coprocessor is further configured with an approximate matching module (810), the approximate matching module having a dictionary (804) loaded thereon, and wherein the approximate matching module is configured to detect any approximate matches that exist between the words in the data stream and a plurality of words in the dictionary, and wherein the coprocessor is further configured to, in response to the detection of an approximate match between a word in the data stream and a word in the dictionary, update an entry in the generated index corresponding to that dictionary word with a pointer (106) to the data word within the data stream that is an approximate match to that dictionary word.

17. The system of claim 16 wherein the approximate matching module is further configured to detect any approximate matches that exist between the words of the data stream and a plurality of words in a plurality of dictionaries, and wherein each of the dictionaries corresponds to a different one of the generated indexes.

18. The system of claim 16 wherein the coprocessor is further configured to generate a general index (100) for words within the data stream that are not approximate matches to any of the words within any of the dictionaries.

19. The system of claim 12 wherein the coprocessor is further configured to generate a general index (100) for data within the data stream that is not a pattern match to any of the pre-defined patterns.

20. The system of any of claims 12 and 19 wherein the data stream comprises a plurality of streaming data objects;
wherein the coprocessor is further configured to perform stream pre-processing (602) on the data stream by (i) parsing the data objects into a plurality of words (760), (ii) generating a data object identifier (756) that corresponds to each data object, wherein each data object identifier is indicative of its corresponding data object's position within the data stream, and (iii) generating a position identifier (758) that corresponds to each parsed word, wherein each position identifier is indicative of its corresponding word's position within the data stream;
wherein the regular expression pattern matching module is further configured to analyze the pre-processed data stream to detect the pattern matches; and
wherein the coprocessor is further configured to generate a plurality of the entries (102) for the indexes corresponding to the patterns by (1) generating a plurality of terms (104) for the indexes corresponding to the patterns using the detected pattern matches, and (2) generating a plurality of the pointers for the indexes corresponding to the patterns based at least in part on the generated data object identifiers and the generated position identifiers for the detected pattern matches.

21. The system of claim 20 wherein the pre-defined patterns comprise at least one member of the group consisting of a credit card number pattern, a social security number pattern, an email address pattern, a telephone number pattern, and an Internet uniform resource locator (URL) pattern.

22. The system of any of claims 20-21 wherein the data stream comprises a plurality of web pages, and wherein an index corresponding to a pattern comprises a plurality of pointers to the web pages which contain the pattern corresponding to that index, the apparatus further comprising:
an Internet search engine configured to (1) receive a pattern query, (2) look up the web pages that are responsive to the pattern query based on the web page pattern index, and (3) provide search results for the pattern query in response to the look up operation.

23. The system of claim 12 wherein the coprocessor is further configured to (i) perform a classification operation (1100) on the data stream based on the generated metadata to determine whether portions of the data stream belong to any of a plurality of predefined classes, and (ii) generate a plurality of data class indexes for the data stream based on the classification operation.

24. The system of claim 12 wherein the coprocessor is further configured to generate a histogram (1300) for the data stream, and wherein the processor is further configured to perform a clustering operation (1302) for the data within the data stream based on the generated histogram.

25. The system of claim 12 wherein the processor is further configured to merge the generated index with an existing operational index (1000) maintained by a relational database (304).

26. The system of any of claims 12-25 wherein the coprocessor comprises a reconfigurable logic device (402).

27. The system of claim 26 wherein the reconfigurable logic device has firmware (350) deployed thereon, the firmware being configured to perform the metadata generation operation.

## Patentansprüche

1. Indexierungsverfahren, umfassend:
Streamen von Daten durch eine rekonfigurierbare Logikvorrichtung (402), wobei die rekonfigurierbare Logikvorrichtung eine auf diese angewandte Firmware (350) aufweist;
wobei die Firmware Metadaten für die Streamingdaten generiert; und
wobei die Firmware eine Vielzahl von Indizes (100) für die Streamingdaten auf Basis der generierten Metadaten generiert; und
wobei der Metadatengenerierungsschritt ferner ein Ausführen einer Regulären-Ausdrucksmusterübereinstimmungsoperation (910) auf den Streamingdaten umfasst, die durch eine Vielzahl von vordefinierten Mustern (912, 914, ...) verschlüsselt sind, wobei jedes vordefinierte Muster einem unterschiedlichen von den generierten Indizes entspricht.

2. Verfahren nach Anspruch 1, wobei der Metadatengenerierungsschritt ferner ein Ausführen einer Genauen-Übereinstimmungsoperation (800) auf den Streamingdaten umfasst, die durch eine Vielzahl von Wörtern in einer Vielzahl von Wörterbüchern (804) verschlüsselt sind, wobei jedes Wörterbuch einem unterschiedlichen von den generierten Indizes entspricht.

3. Verfahren nach Anspruch 1, wobei der Metadatengenerierungsschritt ferner ein Ausführen einer Ungefähren-Übereinstimmungsoperation (810) auf den Streamingdaten umfasst, die durch eine Vielzahl von Wörtern in einer Vielzahl von Wörterbüchern (804) verschlüsselt sind, wobei jedes Wörterbuch einem unterschiedlichen von den generierten Indizes entspricht.

4. Verfahren nach einem der Ansprüche 2 und 3, wobei eine Vielzahl der generierten Indizes einer Vielzahl der Wörterbücher entspricht, und eine weitere Vielzahl der generierten Indizes einer Vielzahl der vordefinierten Muster entspricht.

5. Verfahren nach Anspruch 1, wobei die Streamingdaten eine Vielzahl von Datenobjekten umfassen, wobei das Verfahren ferner Folgendes umfasst:
Vorverarbeiten (602) der Streamingdaten durch die Firmware durch (i) Parsen der Datenobjekte in eine Vielzahl von Wörtern (760), (ii) Generieren eines Datenobjektidentifikators (756), der jedem Datenobjekt entspricht, wobei jeder Datenobjektidentifikator die Position seines entsprechenden Datenobjekts innerhalb der Streamingdaten anzeigt, und (iii) Generieren eines Positionsidentifikators (758), der jedem geparsten Wort entspricht, wobei jeder Positionsidentifikator die Position seines entsprechenden Wortes innerhalb der Streamingdaten anzeigt;
wobei der Schritt des Ausführens der Regulären-Ausdrucksmusterübereinstimmungsoperation das Ausführen einer Regulären-Ausdrucksmusterübereinstimmung auf den vorverarbeiteten Streamingdaten durch die Firmware in Bezug auf eine Vielzahl von Mustern umfasst, um zu detektieren, ob innerhalb der vorverarbeiteten Streamingdaten etwaige Musterübereinstimmungen vorhanden sind; und
wobei der Generierungsschritt ein Generieren einer Vielzahl von Musterindizes für die detektierten Musterübereinstimmungen durch die Firmware umfasst, und zwar durch (1) Generieren einer Vielzahl von Begriffen (104) für die Musterindizes durch Verwendung der detektierten Musterübereinstimmungen und (2) Generieren einer Vielzahl von Zeigern (106) für die Musterindizes, zumindest teilweise auf Basis der generierten Datenobjektidentifikatoren und der generierten Positionsidentifikatoren für die detektierten Musterübereinstimmungen.

6. Verfahren nach Anspruch 5, wobei die Muster mindestens ein Element der aus einem Kreditkartennummermuster, einem Sozialversicherungsnummermuster, einem E-Mail-Adressenmuster, einem Telefonnummermuster und einem Internet-Uniform-Resource-Locator(URL)-Muster bestehenden Gruppe umfassen

7. Verfahren nach einem der Ansprüche 5-6, wobei die Streamingdaten eine Vielzahl von Webseiten umfassen, und wobei ein Musterindex eine Vielzahl von Zeigern auf die Webseiten umfasst, die das dem Musterindex entsprechende Muster enthalten, wobei das Verfahren ferner Folgendes umfasst:
eine Internet-Suchmaschine, die eine Musterabfrage empfängt; und
wobei die Internet-Suchmaschine die Webseiten nachschlägt, die auf die Musterabfrage auf Basis des mindestens einen von den Musterindizes reagieren; und
wobei die Internet-Suchmaschine Suchergebnisse für die Musterabfrage als Antwort auf den Nachschlagschritt bereitstellt.

8. Verfahren nach Anspruch 1, wobei der Metadatengenerierungsschritt ferner ein Ausführen einer Klassifizierungsoperation (1100) auf den Streamingdaten umfasst.

9. Verfahren nach Anspruch 1, wobei der Metadatengenerierungsschritt ferner ein Ausführen einer Histogrammgenerierungsoperation (1300) auf den Streamingdaten umfasst, wobei das Verfahren ferner ein Ausführen einer Clusterbildungsoperation (1302) auf den Streamingdaten auf Basis des generierten Histogramms umfasst.

10. Verfahren nach Anspruch 1, ferner umfassend ein Ausführen einer Merkmalvektorextraktion (602) auf den Streamingdaten durch Verwendung der Firmware.

11. Verfahren nach Anspruch 1, ferner umfassend ein Zusammenführen der generierten Indizes mit einer Vielzahl von betriebsbereiten Indizes (1000, 1002, ...), die von einer relationalen Datenbank (304) gespeichert sind.

12. System zur Generierung von Metadaten für Daten, wobei das System Folgendes umfasst:
einen Hauptprozessor (412);
einen Koprozessor (450);
wobei der Hauptprozessor konfiguriert ist, einen Strom von Daten an den Koprozessor zu leiten, wobei der Datenstrom eine Vielzahl von Datenwörtern (760) umfasst; und
wobei der Koprozessor konfiguriert ist, (i) den Datenstrom zu empfangen, (ii) eine Metadatengenerierungsoperation (604) auf dem Datenstrom auszuführen, um dadurch Metadaten für den Datenstrom zu generieren, und (iii) gleichzeitig eine Vielzahl von Indizes (100) für den Datenstrom auf Basis der generierten Metadaten zu generieren;
wobei der Koprozessor mit einem Regulären-Ausdrucksmusterübereinstimmungsmodul (910) konfiguriert ist, wobei das Reguläre-Ausdrucksmusterübereinstimmungsmodul eine auf diesem geladene Vielzahl von vordefinierten Mustern (912, 914, ...) aufweist;
wobei das Reguläre-Ausdrucksmusterübereinstimmungsmodul konfiguriert ist, etwaige Musterübereinstimmungen zu detektieren, die zwischen den Wörtern in dem Datenstrom und den vordefinierten Mustern vorhanden sind; und
wobei der Koprozessor ferner konfiguriert ist, als Antwort auf die Detektion einer Musterübereinstimmung zwischen Daten im Datenstrom und einem vordefinierten Muster, einen Eintrag im generierten Index, der dem vordefinierten Muster entspricht, mit einem Zeiger (106) auf die Daten innerhalb des Datenstroms zu aktualisieren, die eine Musterübereinstimmung mit dem vordefinierten Muster sind.

13. System nach Anspruch 12, wobei der Koprozessor ferner mit einem Genauen-Übereinstimmungsmodul (800) konfiguriert ist, wobei das Genaue-Übereinstimmungsmodul ein auf diesem geladenes Wörterbuch (804) aufweist, und wobei das Genaue-Übereinstimmungsmodul konfiguriert ist, etwaige genaue Übereinstimmungen zu detektieren, die zwischen den Wörtern im Datenstrom und einer Vielzahl von Wörtern im Wörterbuch vorhanden sind, und wobei der Koprozessor ferner konfiguriert ist, als Antwort auf die Detektion einer genauen Übereinstimmung zwischen einem Wort im Datenstrom und einem Wort im Wörterbuch, einen Eintrag im generierten Index, der demjenigen Wörterbuchwort entspricht, mit einem Zeiger (106) auf das Datenwort innerhalb des Datenstroms zu aktualisieren, das eine genaue Übereinstimmung mit dem Wörterbuchwort ist.

14. System nach Anspruch 13, wobei das Genaue-Übereinstimmungsmodul ferner konfiguriert ist, etwaige genaue Übereinstimmungen zu detektieren, die zwischen den Wörtern des Datenstroms und einer Vielzahl von Wörtern in einer Vielzahl von Wörterbüchern vorhanden sind, und wobei jedes der Wörterbücher einem unterschiedlichen von den generierten Indizes entspricht.

15. System nach Anspruch 13, wobei der Koprozessor ferner konfiguriert ist, einen allgemeinen Index (100) für Wörter innerhalb des Datenstroms zu generieren, die keine genauen Übereinstimmungen mit etwaigen von den Wörtern innerhalb etwaiger von den Wörterbüchern sind.

16. System nach Anspruch 12, wobei der Koprozessor ferner mit einem Ungefähren-Übereinstimmungsmodul (810) konfiguriert ist, wobei das Ungefähre-Übereinstimmungsmodul ein auf diesem geladenes Wörterbuch (804) aufweist, und wobei das Ungefähre-Übereinstimmungsmodul konfiguriert ist, etwaige ungefähre Übereinstimmungen zu detektieren, die zwischen den Wörtern im Datenstrom und einer Vielzahl von Wörtern im Wörterbuch vorhanden sind, und wobei der Koprozessor ferner konfiguriert ist, als Antwort auf die Detektion einer ungefähren Übereinstimmung zwischen einem Wort im Datenstrom und einem Wort im Wörterbuch, einen Eintrag im generierten Index, der dem Wörterbuchwort entspricht, mit einem Zeiger (106) auf das Datenwort innerhalb des Datenstroms zu aktualisieren, das eine ungefähre Übereinstimmung mit dem Wörterbuchwort ist.

17. System nach Anspruch 16, wobei das Ungefähre-Übereinstimmungsmodul ferner konfiguriert ist, etwaige ungefähre Übereinstimmungen zwischen den Wörtern des Datenstroms und einer Vielzahl von Wörtern in einer Vielzahl von Wörterbüchern zu detektieren, und wobei jedes von den Wörterbüchern einem unterschiedlichen von den generierten Indizes entspricht.

18. System nach Anspruch 16, wobei der Koprozessor ferner konfiguriert ist, einen allgemeinen Index (100) für Wörter innerhalb des Datenstroms zu generieren, die keine ungefähren Übereinstimmungen mit etwaigen Wörtern innerhalb etwaiger von den Wörterbüchern sind.

19. System nach Anspruch 12, wobei der Koprozessor ferner konfiguriert ist, einen allgemeinen Index (100) für Daten innerhalb des Datenstroms zu generieren, die keine Musterübereinstimmung mit etwaigen von den vordefinierten Mustern sind.

20. System nach einem der Ansprüche 12 und 19, wobei der Datenstrom eine Vielzahl von Streamingdaten-Objekten umfasst;
wobei der Koprozessor ferner konfiguriert ist, eine Datenstrom-Vorverarbeitung (602) auf dem Datenstrom durch Folgendes auszuführen: (i) Parsen der Datenobjekte in eine Vielzahl von Wörtern (760), (ii) Generieren eines Datenobjektidentifikators (756), der jedem Datenobjekt entspricht, wobei jeder Datenobjektidentifikator die Position seines entsprechenden Datenobjekts innerhalb des Datenstroms anzeigt und (iii) Generieren eines Positionsidentifikators (758), der jedem geparsten Wort entspricht, wobei jeder Positionsidentifikator die Position seines entsprechenden Wortes innerhalb des Datenstroms anzeigt;
wobei das Reguläre-Ausdrucksmusterübereinstimmungsmodul ferner konfiguriert ist, den vorverarbeiteten Datenstrom zu analysieren, um die Musterübereinstimmungen zu detektieren; und
wobei der Koprozessor ferner konfiguriert ist, eine Vielzahl von den Einträgen (102) für die Indizes, die den Mustern entsprechen, zu generieren, und zwar durch: (1) Generieren einer Vielzahl von Begriffen (104) für die Indizes, die den Mustern entsprechen, durch Verwendung der detektierten Musterübereinstimmungen und (2) Generieren einer Vielzahl von den Zeigern für die Indizes, die den Mustern entsprechen, zumindest teilweise auf Basis der generierten Datenobjektidentifikatoren und der generierten Positionsidentifikatoren für die detektierten Musterübereinstimmungen.

21. System nach Anspruch 20, wobei die vordefinierten Muster mindestens ein Element von der aus einem Kreditkartennummermuster, einem Sozialversicherungsnummermuster, einem E-Mail-Adressenmuster, einem Telefonnummermuster und einem Internet-Uniform-Resource-Locator(URL)-Muster bestehenden Gruppe umfassen.

22. System nach einem der Ansprüche 20-21, wobei der Datenstrom eine Vielzahl von Webseiten umfasst, und wobei ein einem Muster entsprechender Index eine Vielzahl von Zeigern auf die Webseiten umfasst, die das Muster, das dem Index entspricht, enthalten, wobei die Vorrichtung ferner Folgendes umfasst:
eine Internet-Suchmaschine, die konfiguriert ist, (1) eine Musterabfrage zu empfangen, (2) die Webseiten, die auf die Musterabfrage reagieren, auf Basis des Webseiten-Musterindexes nachzuschlagen und (3) Suchergebnisse für die Musterabfrage als Antwort auf die Nachschlageoperation bereitzustellen.

23. System nach Anspruch 12, wobei der Koprozessor ferner konfiguriert ist, (i) eine Klassifizierungsoperation (1100) auf dem Datenstrom auf Basis der generierten Metadaten auszuführen, um zu bestimmen, ob Abschnitte des Datenstroms zu etwaigen aus der Vielzahl von vordefinierten Klassen gehören, und (ii) eine Vielzahl von Datenklassenindizes für den Datenstrom auf Basis der Klassifizierungsoperation zu generieren.

24. System nach Anspruch 12, wobei der Koprozessor ferner konfiguriert ist, ein Histogramm (1300) für den Datenstrom zu generieren, und wobei der Prozessor ferner konfiguriert ist, eine Clusterbildungsoperation (1302) für die Daten innerhalb des Datenstroms auf Basis des generierten Histogramms zu generieren.

25. System nach Anspruch 12, wobei der Prozessor ferner konfiguriert ist, den generierten Index mit einem vorhandenen, betriebsbereiten Index (1000), der durch die relationale Datenbank (304) aufrechterhalten wird, zusammenzuführen.

26. System nach einem der Ansprüche 12-25, wobei der Koprozessor eine rekonfigurierbare Logikvorrichtung (402) umfasst.

27. System nach Anspruch 26, wobei die rekonfigurierbare Logikvorrichtung eine auf diese angewandte Firmware (350) aufweist, wobei die Firmware konfiguriert ist, die Metadatengenerierungsoperation auszuführen.

## Revendications

1. Procédé d'indexation comprenant :
transmettre des données en continu via un dispositif logique reconfigurable (402), dans lequel le dispositif logique reconfigurable comporte un micrologiciel (350) déployé sur celui-ci ;
le micrologiciel générant des métadonnées pour les données en continu ; et
le micrologiciel générant une pluralité d'index (100) pour les données en continu sur la base des métadonnées générées ; et
dans lequel l'étape de génération de métadonnées comprend en outre l'étape consistant à effectuer une opération de mise en correspondance de motifs d'expression régulière (910) sur les données en continu qui sont saisies par une pluralité de motifs prédéfinis (912, 914, ...), dans lequel chaque motif prédéfini correspond à l'un différent des index générés.

2. Procédé selon la revendication 1, dans lequel l'étape de génération de métadonnées comprend en outre l'exécution d'une opération de mise en correspondance exacte (800) sur les données en continu qui sont saisies par une pluralité de mots dans une pluralité de dictionnaires (804), dans lequel chaque dictionnaire correspond à l'un différent des index générés.

3. Procédé selon la revendication 1, dans lequel l'étape de génération de métadonnées comprend en outre l'exécution d'une opération de mise en correspondance approximative (810) sur les données en continu qui sont saisies par une pluralité de mots dans une pluralité de dictionnaires (804), dans lequel chaque dictionnaire correspond à l'un différent l'un des index générés.

4. Procédé selon l'une quelconque des revendications 2 et 3, dans lequel une pluralité des index générés correspondent à une pluralité de dictionnaires et une autre pluralité des index générés correspondent à une pluralité de motifs prédéfinis.

5. Procédé selon la revendication 1, dans lequel les données en continu comprennent une pluralité d'objets de données, le procédé comprenant en outre :
le micrologiciel prétraitant (602) les données en continu en : (i) décomposant les objets de données en une pluralité de mots (760), (ii) générant un identifiant d'objet de données (756) qui correspond à chaque objet de données, dans lequel chaque identifiant d'objet de données est indicatif de sa position d'objet de données correspondant' dans les données en continu, et (iii) générant un identifiant de position (758) qui correspond à chaque mot analysé, dans lequel chaque identifiant de position est indicatif de sa position de mot correspondant dans les données en continu ;
dans lequel l'étape d'exécution de l'opération de mise en correspondance de motifs d'expression régulière comprend le micrologiciel effectuant une mise en correspondance de motifs d'expression régulière sur les données de transmission en continu prétraitées par rapport à une pluralité de motifs pour détecter si de quelconques correspondances de motifs existent dans les données en continu prétraitées ; et
dans lequel l'étape de génération comprend le micrologiciel générant une pluralité d'indices de motif pour les correspondances de motifs détectées en (1) générant une pluralité de termes (104) pour les index de motif en utilisant les correspondances de motifs détectées, et (2) générant une pluralité de pointeurs (106) pour les index de motif sur la base au moins en partie des identifiants d'objet de données générés et des identifiants de position générés pour les correspondances de motifs détectées.

6. Procédé selon la revendication 5, dans lequel les motifs comprennent au moins un membre du groupe consistent en un motif de numéro de carte de crédit, un motif de numéro de sécurité sociale, un motif d'adresse de messagerie, un motif de numéro de téléphone et un motif de localisateur de ressources uniformes Internet (URL).

7. Procédé selon l'une quelconque des revendications 5 à 6, dans lequel les données en continu comprennent une pluralité de pages Web, et dans lequel un index de motif comprend une pluralité de pointeurs sur les pages Web qui contiennent le motif correspondant à cet index de motif, le procédé comprenant en outre :
un moteur de recherche Internet recevant une requête de motif ; et
le moteur de recherche Internet recherchant les pages Web répondant à la requête de motif sur la base d'au moins l'un des index de motif ; et
le moteur de recherche Internet fournissant des résultats de recherche pour la requête de motif en réponse à l'étape de recherche.

8. Procédé selon la revendication 1, dans lequel l'étape de génération de métadonnées comprend en outre l'exécution d'une opération de classification (1100) sur les données en continu.

9. Procédé selon la revendication 1, dans lequel l'étape de génération de métadonnées comprend en outre l'exécution d'une opération de génération d'histogramme (1300) sur les données en continu, le procédé comprenant en outre la réalisation d'une opération de regroupement (1302) sur les données en continu sur la base de l'histogramme généré.

10. Procédé selon la revendication 1, comprenant en outre la réalisation d'une extraction de vecteur de caractéristique (602) sur les données en continu à l'aide du micrologiciel.

11. Procédé selon la revendication 1, comprenant en outre la fusion des index générés avec une pluralité d'index opérationnels (1000, 1002, ...) stockés par une base de données relationnelle (304).

12. Système pour générer des métadonnées pour des données, le système comprenant :
un processeur principal (412) ;
un coprocesseur (450) ;
dans lequel le processeur principal est configuré pour diriger un flux de données vers le coprocesseur, dans lequel le flux de données comprend une pluralité de mots de données (760) ; et
dans lequel le coprocesseur est configuré pour (i) recevoir le flux de données, (ii) effectuer une opération de génération de métadonnées (604) sur le flux de données afin de générer ainsi des métadonnées pour le flux de données, et (iii) générer simultanément une pluralité d'index (100) pour le flux de données sur la base des métadonnées générées ;
dans lequel le coprocesseur est configuré avec un module de mise correspondance de motifs d'expression régulière (910), le module de mise en correspondance de motifs d'expression régulière ayant une pluralité de motifs prédéfinis (912, 914, ...) chargés dessus ;
dans lequel le module de mise en correspondance de motifs d'expression régulière est configuré pour détecter toute correspondance de motifs qui existe entre les mots du flux de données et les motifs prédéfinis ; et
dans lequel le coprocesseur est en outre configuré pour, en réponse à la détection d'une correspondance de motifs entre des données dans le flux de données et un motif prédéfini, mettre à jour une entrée dans l'index généré correspondant à ce motif prédéfini avec un pointeur (106) aux données du flux de données qui est une correspondance de motif à ce motif prédéfini.

13. Système selon la revendication 12, dans lequel le coprocesseur est en outre configuré avec un module de mise en correspondance exacte (800), le module de mise en correspondance exacte ayant un dictionnaire (804) chargé sur celui-ci, et dans lequel le module de mise en correspondance exacte est configuré pour détecter toute correspondance exacte qui existe entre les mots dans le flux de données et une pluralité de mots dans le dictionnaire, et dans lequel le coprocesseur est en outre configuré pour, en réponse à la détection d'une correspondance exacte entre un mot dans le flux de données et un mot dans le dictionnaire, mettre à jour une entrée dans l'index généré correspondant à ce mot de dictionnaire avec un pointeur (106) sur le mot de données dans le flux de données qui est une correspondance exacte à ce mot de dictionnaire.

14. Système selon la revendication 13, dans lequel le module de mise en correspondance exacte est en outre configuré pour détecter toute correspondance exacte qui existe entre les mots du flux de données et une pluralité de mots dans une pluralité de dictionnaires, et dans lequel chacun des dictionnaires correspond à l'un différent des index générés.

15. Système selon la revendication 13, dans lequel le coprocesseur est en outre configuré pour générer un index général (100) pour des mots dans le flux de données qui ne correspondent pas exactement à l'un des mots dans l'un quelconque des dictionnaires.

16. Système selon la revendication 12, dans lequel le coprocesseur est en outre configuré avec un module de mise en correspondance approximative (810), le module de mise en correspondance approximative ayant un dictionnaire (804) chargé sur celui-ci, et dans lequel le module de mise en correspondance approximative est configuré pour détecter toute correspondance approximative qui existe entre les mots du flux de données et une pluralité de mots du dictionnaire, et dans lequel le coprocesseur est en outre configuré pour, en réponse à la détection d'une correspondance approximative entre un mot du flux de données et un mot du dictionnaire, mettre à jour une entrée dans l'index généré correspondant à ce mot de dictionnaire avec un pointeur (106) sur le mot de données dans le flux de données correspondant à ce mot de dictionnaire.

17. Système selon la revendication 16, dans lequel le module de mise en correspondance approximative est en outre configuré pour détecter toute correspondance approximative existant entre les mots du flux de données et une pluralité de mots dans une pluralité de dictionnaires, et dans lequel chacun des dictionnaires correspond à l'un différent des index générés.

18. Système selon la revendication 16, dans lequel le coprocesseur est en outre configuré pour générer un index général (100) pour des mots dans le flux de données qui ne correspondent pas approximativement à l'un quelconque des mots dans l'un quelconque des dictionnaires.

19. Système selon la revendication 12, dans lequel le coprocesseur est en outre configuré pour générer un index général (100) pour des données dans le flux de données qui n'est pas une correspondance de motif avec l'un quelconque des motifs prédéfinis.

20. Système selon l'une quelconque des revendications 12 et 19, dans lequel le flux de données comprend une pluralité d'objets de données en continu ;
dans lequel le coprocesseur est en outre configuré pour effectuer un pré-traitement de flux (602) sur le flux de données en (i) décomposant les objets de données en une pluralité de mots (760), (ii) générant un identifiant d'objet de données (756) qui correspond à chaque objet de données, dans lequel chaque identifiant d'objet de données est indicatif de sa position d'objet de données correspondante dans le flux de données, et (iii) générer un identifiant de position (758) qui correspond à chaque mot décomposé, dans lequel chaque identifiant de position est indicatif de sa position de mot correspondante dans le flux de données ;
dans lequel le module de mise en correspondance de motifs d'expression régulière est en outre configuré pour analyser le flux de données prétraité afin de détecter les correspondances de motifs ; et
dans lequel le coprocesseur est en outre configuré pour générer une pluralité des entrées (102) pour les index correspondant aux motifs en (1) générant une pluralité de termes (104) pour les index correspondant aux motifs en utilisant les correspondances de motifs détectées, et (2) générer une pluralité de pointeurs pour les index correspondant aux motifs sur la base au moins en partie des identifiants d'objet de données générés et des identifiants de position générés pour les correspondances de motifs détectées.

21. Système selon la revendication 20, dans lequel les motifs prédéfinis comprennent au moins un élément du groupe consistant en un motif de numéro de carte de crédit, un motif de numéro de sécurité sociale, un motif d'adresse de messagerie, un motif de numéro de téléphone et un motif de localisateur de ressources uniformes Internet (URL).

22. Système selon l'une quelconque des revendications 20 à 21, dans lequel le flux de données comprend une pluralité de pages Web, et dans lequel un index correspondant à un motif comprend une pluralité de pointeurs vers les pages Web qui contiennent le motif correspondant à cet index, l'appareil comprenant en outre :
un moteur de recherche Internet configuré pour (1) recevoir une requête de motif, (2) rechercher les pages Web répondant à la requête de motif sur la base de l'index de motif de page Web, et (3) fournir des résultats de recherche pour la requête de motif en réponse à l'opération de recherche.

23. Système selon la revendication 12, dans lequel le coprocesseur est en outre configuré pour (i) effectuer une opération de classification (1100) sur le flux de données sur la base des métadonnées générées pour déterminer si des parties du flux de données appartiennent à l'une quelconque d'une pluralité de classes prédéfinies et (ii) générer une pluralité d'index de classes de données pour le flux de données sur la base de l'opération de classification.

24. Système selon la revendication 12, dans lequel le coprocesseur est en outre configuré pour générer un histogramme (1300) pour le flux de données, et dans lequel le processeur est en outre configuré pour effectuer une opération de regroupement (1302) pour les données dans le flux de données sur la base de l'histogramme généré.

25. Système selon la revendication 12, dans lequel le processeur est en outre configuré pour fusionner l'index généré avec un index opérationnel existant (1000) maintenu par une base de données relationnelle (304).

26. Système selon l'une quelconque des revendications 12 à 25, dans lequel le coprocesseur comprend un dispositif logique reconfigurable (402).

27. Système selon la revendication 26, dans lequel le dispositif logique reconfigurable a le micrologiciel (350) déployé sur celui-ci, le micrologiciel étant configuré pour effectuer l'opération de génération de métadonnées.
